(19) Europäisches Patentamt
European Patent Office
Office européen des brevets

(11) **EP 4 270 955 A1**

(12) **EUROPEAN PATENT APPLICATION**
published in accordance with Art. 153(4) EPC

(43) Date of publication:
**01.11.2023 Bulletin 2023/44**

(21) Application number: **20966333.5**

(22) Date of filing: **22.12.2020**

(51) International Patent Classification (IPC):
***H04N 19/593*** *(2014.01)* ***H04N 19/186*** *(2014.01)*
***G06T 17/00*** *(2006.01)*

(52) Cooperative Patent Classification (CPC):
**G06T 17/00; H04N 19/186; H04N 19/593**

(86) International application number:
**PCT/CN2020/138423**

(87) International publication number:
**WO 2022/133753 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **YUAN, Hui**
  **Dongguan, Guangdong 523860 (CN)**
- **WANG, Lu**
  **Dongguan, Guangdong 523860 (CN)**
- **WANG, Xiaohui**
  **Dongguan, Guangdong 523860 (CN)**
- **LIU, Qi**
  **Dongguan, Guangdong 523860 (CN)**

(74) Representative: **Mewburn Ellis LLP**
**Aurora Building**
**Counterslip**
**Bristol BS1 6BX (GB)**

# (54) POINT CLOUD ENCODING AND DECODING METHODS AND SYSTEMS, POINT CLOUD ENCODER, AND POINT CLOUD DECODER

(57) A point cloud encoding and decoding method and system, a point cloud encoder, and a point cloud decoder are provided in the disclosure. Lossless encoding is performed on a residual value of attribute information of at least one point in a point cloud, to reduce the influence of quantization on a reconstructed value of the attribute information, which further improves the accuracy of attribute information prediction without bringing significant influence on the size of an attribute bitstream, thereby improving the encoding effect of the attribute information.

600

obtain geometry information and attribute information of points in a point cloud — S601

determine prediction values of the attribute information of the points in the point cloud according to the geometry information of the points in the point cloud — S602

determine residual values of the attribute information of the points in the point cloud according to the prediction values of the attribute information of the points in the point cloud — S603

process the residual values of the attribute information of the points in the point cloud with a first encoding process, where lossless encoding is performed on a residual value of attribute information of at least one point in the point cloud in the first encoding process — S604

FIG. 6

EP 4 270 955 A1

## Description

TECHNICAL FIELD

This disclosure relates to the field of point cloud encoding and decoding technology, in particular to a point cloud encoding and decoding method and system, a point cloud encoder, and a point cloud decoder.

BACKGROUND

A surface of an object is collected by a collecting device to form point cloud data, where the point cloud data includes hundreds of thousands or even more points. In a video production process, the point cloud data is transmitted between a point cloud encoding device and a point cloud decoding device in the form of a point cloud media file. However, such a huge number of points brings a challenge to transmission, and thus the point cloud encoding device needs to compress the point cloud data for transmission.

The compression of the point cloud data mainly includes the compression of geometry information and the compression of attribute information. In the compression of attribute information, redundant information in the point cloud data is reduced or eliminated through prediction. For example, one or more neighbouring points of a current point are obtained from encoded points, and attribute information of the current point is predicted according to attribute information of the neighbouring points.

However, at present, point cloud prediction is inaccurate, which in turn reduces the effect of point cloud encoding.

SUMMARY

Implementations of the disclosure provide a point cloud encoding and decoding method and system, a point cloud encoder, and a point cloud decoder, to improve accuracy of point cloud prediction.

In a first aspect, a point cloud encoding method is provided in the disclosure. The method includes the following. Geometry information and attribute information of points in a point cloud are obtained. Prediction values of the attribute information of the points in the point cloud are determined according to the geometry information of the points in the point cloud. Residual values of the attribute information of the points in the point cloud are determined according to the prediction values of the attribute information of the points in the point cloud. The residual values of the attribute information of the points in the point cloud are processed with a first encoding process, where lossless encoding is performed on a residual value of attribute information of at least one point in the point cloud in the first encoding process.

In a second aspect, a point cloud decoding method is provided in the disclosure. The method includes the following. A bitstream of a point cloud is decoded to determine geometry information of points in the point cloud. Prediction values of attribute information of the points in the point cloud are determined according to the geometry information of the points in the point cloud. The bitstream of the point cloud is decoded to obtain residual values of the attribute information of the points in the point cloud, where the residual values include a residual value of at least one point of which the residual value of attribute information is determined to be subject to lossless decoding. Reconstructed values of the attribute information of the points in the point cloud are determined according to the prediction values and the residual values of the attribute information of the points in the point cloud.

In a third aspect, a point cloud encoder is provided in the disclosure. The point cloud encoder is configured to perform the method of the above first aspect or various implementations thereof. Specifically, the encoder includes functional units configured to perform the method of the above first aspect or various implementations thereof.

In a fourth aspect, a point cloud decoder is provided in the disclosure. The point cloud decoder is configured to perform the method of the above second aspect or various implementations thereof. Specifically, the decoder includes functional units configured to perform the method of the above second aspect or various implementations thereof.

In a fifth aspect, a point cloud encoder is provided. The point cloud encoder includes a processor and a memory. The memory is configured to store a computer program, and the processor is configured to invoke and run the computer program stored in the memory to perform the method of the above first aspect or various implementations thereof.

In a sixth aspect, a point cloud decoder is provided. The point cloud decoder includes a processor and a memory. The memory is configured to store a computer program, and the processor is configured to invoke and run the computer program stored in the memory to perform the method of the above second aspect or various implementations thereof.

In a seventh aspect, a point cloud encoding and decoding system is provided. The system includes a point cloud encoder and a point cloud decoder. The point cloud encoder is configured to perform the method of the above first aspect or various implementations thereof, and the point cloud decoder is configured to perform the method of the above second aspect or various implementations thereof.

In an eighth aspect, a chip is provided. The chip is configured to implement the method of the above first aspect or second aspect or various implementations thereof. Specifically, the chip includes a processor configured to invoke from a memory and run a computer program to cause a device installed with the chip to perform the method of the above first aspect or second aspect or various implementations thereof.

In a ninth aspect, a computer-readable storage medium is provided. The computer-readable storage medium is configured to store a computer program that causes a computer to perform the method of the above first aspect or second aspect or various implementations thereof.

In a tenth aspect, a computer program product is provided. The computer program product includes computer program instructions that cause a computer to perform the method of the above first aspect or second aspect or various implementations thereof.

In an eleventh aspect, a computer program is provided. When run on a computer, the computer program causes the computer to perform the method of the above first aspect or second aspect or various implementations thereof.

Based on the above technical solutions, lossless encoding (i.e., no quantization) is performed on the residual value of the attribute information of the at least one point in the point cloud, to reduce the influence of quantization on the reconstructed value of the attribute information, which further improves the accuracy of attribute information prediction without bringing significant influence on the size of the attribute bitstream, thereby improving the encoding effect of the attribute information.

## BRIEF DESCRIPTION OF THE DRAWINGS

FIG. 1 a schematic block diagram of a point cloud encoding and decoding system 100 involved in implementations of the disclosure.

FIG. 2 is a schematic block diagram of a point cloud encoder 200 provided in implementations of the disclosure.

FIG. 3 is a schematic block diagram of a decoder 300 provided in implementations of the disclosure.

FIG. 4 is a partial block diagram of an attribute encoding module 400 involved in implementations of the disclosure.

FIG. 5 is a partial block diagram of an attribute decoding module 500 involved in implementations of the disclosure.

FIG. 6 is a schematic flow chart of a point cloud encoding method 600 provided in implementations of the disclosure.

FIG. 7 is a schematic flow chart of a point cloud encoding method 700 provided in implementations of the disclosure.

FIG. 8 is a schematic diagram of level of detail (LOD) partition of partial point cloud data.

FIG. 9 is a schematic diagram of another LOD partition involved in implementations of the disclosure.

FIG. 10 is a schematic flow chart of a point cloud decoding method 800 provided in implementations of the disclosure.

FIG. 11 is a schematic flow chart of a point cloud decoding method 900 provided in implementations of the disclosure.

FIG. 12 is a schematic block diagram of a point cloud encoder 10 provided in implementations of the disclosure.

FIG. 13 is a schematic block diagram of a point cloud decoder 20 provided in implementations of the disclosure.

FIG. 14 is a schematic block diagram of an electronic device 30 provided in implementations of the disclosure.

FIG. 15 is a schematic block diagram of a point cloud encoding and decoding system 40 provided in implementations of the disclosure.

## DETAILED DESCRIPTION

The disclosure can be applied to the field of point cloud compression technology.

To facilitate the understanding of implementations of the disclosure, relevant concepts involved in the implementations of the disclosure are briefly introduced as follows.

The point cloud is a set of discrete points irregularly distributed in space that express a spatial structure and surface attribute of a three-dimensional (3D) object or a 3D scene.

The point cloud data is a specific recording form of the point cloud. Each point in the point cloud can include position information of the point and attribute information of the point. The position information of the point refers to 3D coordinate information of the point. The position information of the point can be called geometry information of the point. For example, the attribute information of the point can include color information and/or reflectance. For example, the color information can be any kind of information on the color space. In an example, the color information can be red green blue (RGB). In another example, the color information can be luma-chroma (YCbCr, YUV) information. For example, Y denotes luma, Cb (U) denotes blue chroma, Cr (V) denotes red chroma, U and V each denote chroma, which is used to describe color difference information. In an example, a point in a point cloud obtained according to a laser measurement principle may include three-dimensional coordinate information of the point and laser reflectance of the point. In another example, a point in a point cloud obtained according to a photographic measurement principle may include three-dimensional coordinate information of the point and color information of the point. In still another example, a point in a point cloud obtained according to a combination of the laser measurement principle and the photographic measurement principle may include the three-dimensional coordinate information of the point, the laser reflectance of the point, and the color information of the point.

The way to obtain the point cloud data includes, but is not limited to at least one of the following. (1) The point cloud data is obtained through computer device generation. A computer device may generate point cloud data of a virtual three-dimensional object and scene. (2) The point cloud data is obtained through 3D laser scanning. Through 3D laser scanning, point cloud data of a static real-world three-dimensional object or scene may be obtained, and the point cloud data in million level may be obtained per second. (3) The point cloud data is obtained through 3D photographic measurement. Point cloud data of a real-world visual scene is obtained by collecting the real-world visual scene through a 3D photographic device (i.e. a group of cameras or a camera device with multiple lenses and sensors), and point cloud data of a dynamic real-world three-dimensional object or scene can be obtained through 3D photography. (4) The point cloud data of biological tissue organs may be obtained through a medical apparatus. In the medical field, the point cloud data of the biological tissue organs may be obtained through the medical apparatus such as magnetic resonance imaging (MRI), computed tomography (CT), and electromagnetic localization information.

According to the acquisition way, the point cloud may include: a dense point cloud and a sparse point cloud.

According to the timing type of the data, the point cloud may include a first type of static point cloud, a second type of dynamic point cloud, and a third type of dynamically-acquired point cloud.

For the first type of static point cloud, the object is stationary, and the device for acquiring the point cloud is also stationary.

For the second type of dynamic point cloud, the object is moving, but the device for acquiring the point cloud is stationary.

For the third type of dynamically-acquired point cloud, the device for acquiring the point cloud is moving.

According to the purpose, the point cloud includes two types.

Type 1: machine-perceived point cloud, for autonomous navigation system, real-time inspection system, geographic information system, visual sorting robot, rescue and disaster relief robot, and other point cloud implementation scenes.

Type 2: human-eye-perceived point cloud, for digital cultural heritage, free viewpoint broadcasting, three-dimensional immersion communication, three-dimensional immersion interaction, and other point cloud implementation scenes.

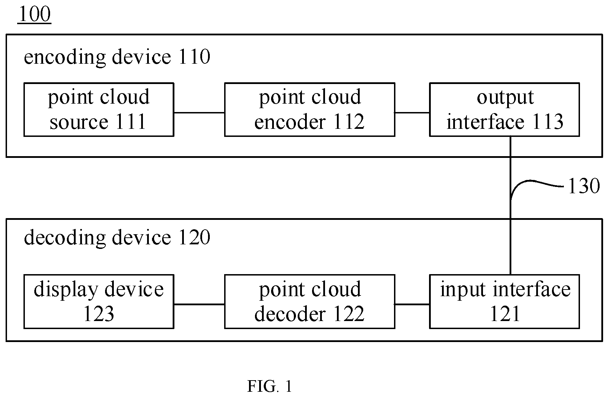

FIG. 1 a schematic block diagram of a point cloud encoding and decoding system 100 involved in implementations of the disclosure. It should be noted that, FIG. 1 is merely an example, and the point cloud encoding and decoding system of implementations of the disclosure includes, but is not limited to, the system illustrated in FIG. 1. As illustrated in FIG. 1, the point cloud encoding and decoding system 100 includes an encoding device 110 and a decoding device 120. The encoding device is configured to encode (which can be understood as compress) point cloud data to generate a bitstream and transmit the bitstream to the decoding device. The decoding device is configured to decode the bitstream generated by the encoding device and obtain decoded point cloud data.

The encoding device 110 of implementations of the disclosure can be understood as a device having a point cloud encoding function and the decoding device 120 can be understood as a device having a point cloud decoding function. That is, in implementations of the disclosure, the encoding device 110 and the decoding device 120 each include a broader device such as a smartphone, a desktop computer, a mobile computing device, a notebook (e.g., a laptop) computer, a tablet computer, a set-top box, a television, a camera, a display device, a digital media player, a point cloud gaming console, an in-vehicle computer, and the like.

In some implementations, the encoding device 110 may transmit encoded point cloud data (e.g., a bitstream) to the decoding device 120 via a channel 130. The channel 130 may include one or more media and/or devices capable of transmitting the encoded point cloud data from the encoding device 110 to the decoding device 120.

In one example, the channel 130 includes one or more communication media that enable the encoding device 110 to transmit the encoded point cloud data directly to the decoding device 120 in real time. In this example, the encoding device 110 may modulate the encoded point cloud data according to the communication standard and transmit the modulated point cloud data to the decoding device 120. The communication media include wireless communication media such as radio frequency (RF) spectrum. Optionally, the communication media may also include wired communication media such as one or more physical transmission lines.

In another example, the channel 130 includes a storage medium that can store the encoded point cloud data encoded by the encoding device 110. The storage medium includes various locally accessible data storage media such as CD, DVD, flash memory, etc. In this example, the decoding device 120 may obtain the encoded point cloud data from the storage medium.

In another example, the channel 130 may include a storage server that may store the encoded point cloud data encoded by the encoding device 110. In this example, the decoding device 120 may download the stored encoded point cloud data from the storage server. Optionally, the storage server may store the encoded point cloud data and may transmit the encoded point cloud data to the decoding device 120 such as a web server (e.g., for a website), a file transfer protocol (FTP) server, etc.

In some implementations, the encoding device 110 includes a point cloud encoder 112 and an output interface 113. The output interface 113 may include a modulator/demodulator (modem) and/or a transmitter.

In some implementations, the encoding device 110 may include a point cloud source 111 in addition to the point cloud encoder 112 and the output interface 113.

The point cloud source 111 may include at least one of: a point cloud acquisition device (e.g., a scanner), a point cloud archive, a point cloud input interface, and a computer graphics system, where the point cloud input interface is configured to receive point cloud data from a point cloud content provider and the computer graphics system is configured to generate the point cloud data.

The point cloud encoder 112 is configured to encode the point cloud data from the point cloud source 111 to generate a bitstream. The point cloud encoder 112 is configured to transmit the encoded point cloud data directly to the decoding device 120 via the output interface 113. The encoded point cloud data can also be stored in a storage medium or storage server, for subsequent reading at the decoding device 120.

In some implementations, the decoding device 120 includes an input interface 121 and a point cloud decoder 122.

In some implementations, the decoding device 120 may include a display device 123 in addition to the input interface 121 and the point cloud decoder 122.

The input interface 121 includes a receiver and/or modem. The input interface 121 may be configured to receive the encoded point cloud data via the channel 130.

The point cloud decoder 122 is configured to: decode the encoded point cloud data to obtain the decoded point cloud data, and transmit the decoded point cloud data to the display device 123.

The display device 123 displays the decoded point cloud data. The display device 123 may be integrated in the decoding device 120 or be outside the decoding device 120. The display device 123 may include various display devices such as a liquid crystal display (LCD), a plasma display, an organic light emitting diode (OLED) display, or other types of display devices.

In addition, FIG. 1 is merely an example, and the technical solution of implementations of the disclosure is not limited to FIG. 1. For example, the technology of the disclosure can also be applied to single point cloud encoding or single point cloud decoding.

Currently, the point cloud encoder may adopt a geometry point cloud compression (G-PCC) encoding and decoding framework or a video point cloud compression (V-PCC) encoding and decoding framework provided by the moving picture experts group (MPEG), or may adopt an AVS-PCC encoding and decoding framework provided by the audio video standard (AVS). The G-PCC and the AVS-PCC both are for the static sparse point cloud and their encoding frameworks are substantially the same. The G-PCC encoding and decoding framework may be used for compression of the first static point cloud and the third type of dynamically-acquired point cloud, and the V-PCC encoding and decoding framework may be used for compression of the second type of dynamic point cloud. The G-PCC encoding and decoding framework is also called a point cloud codec TMC13, and the V-PCC encoding and decoding framework is also called a point cloud codec TMC2.

A point cloud encoder and a point cloud decoder applicable to implementations of the disclosure are described below in terms of the G-PCC encoding and decoding framework.

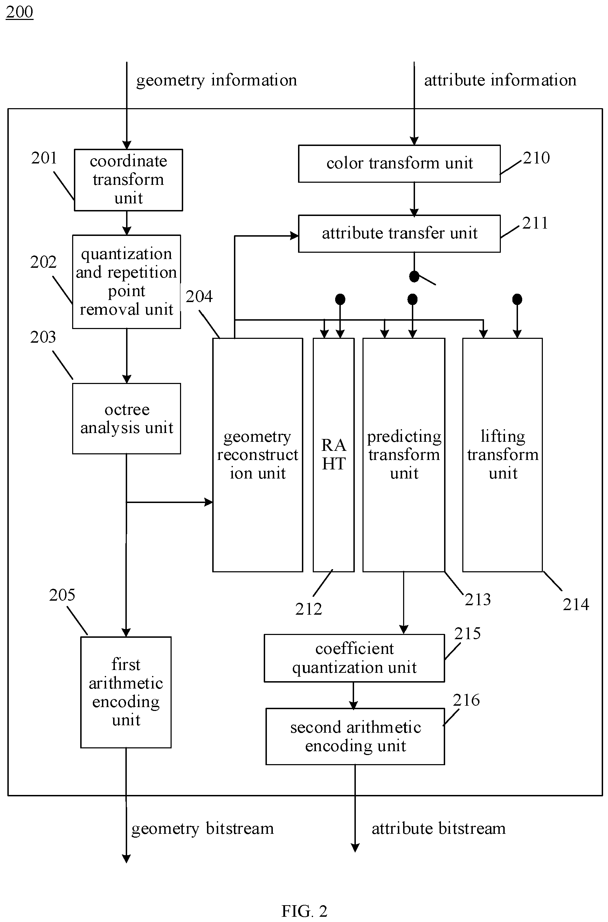

FIG. 2 is a schematic block diagram of a point cloud encoder 200 provided in implementations of the disclosure.

As can be seen from the above, a point in a point cloud can include position information of the point and attribute information of the point. Thus, encoding of points in the point cloud mainly includes position encoding and attribute encoding. In some examples, the position information of the points in the point cloud is also called geometry information, and accordingly, the position encoding of the points in the point cloud can also be called geometry encoding.

The process of the position encoding includes: performing preprocessing such as coordinate transformation and quantization and removal of repetition points on the points in the point cloud, and performing geometry encoding on the preprocessed points, for example, constructing an octree and performing geometry encoding based on the constructed octree to form a geometry bitstream. At the same time, based on the position information output from the constructed octree, the position information of each point in the point cloud data is reconstructed, to obtain a reconstructed value of the position information of each point.

The process of the attribute encoding includes: by giving reconstructed information of position information and original values of attribute information of the input point cloud, selecting one of three prediction modes for point cloud prediction, quantizing the predicted result, and performing arithmetic encoding, to form an attribute bitstream.

As illustrated in FIG. 2, the position encoding can be achieved with the following units: a coordinate transform unit 201, a quantization and repetition point removal unit 202, an octree analysis unit 203, a geometry reconstruction unit 204, and a first arithmetic encoding unit 205.

The coordinate transform unit 201 can be used to transform world coordinates of points in the point cloud to relative coordinates. For example, the minimum values of coordinate axes x, y, and z are respectively subtracted from geometry coordinates of the point, which is equivalent to a de-direct current operation, to transform coordinates of the point in the point cloud from world coordinates to relative coordinates.

The quantization and repetition point removal unit 202 can be used to reduce the number of coordinates through quantization. After quantization, originally different points may be given the same coordinates, and based on this, repetition points may be removed by a deduplication operation. For example, multiple points with the same quantization position and different attribute information may be merged into one point through attribute transformation. In some implementations of the disclosure, the quantization and repetition point removal unit 202 is an optional unit module.

The octree analysis unit 203 can encode position information of quantized points through octree encoding. For example, the point cloud is partitioned in the form of an octree, so that positions of the points may be in a one-to-one correspondence with positions of the octree. Positions of occupied nodes in the octree are determined and flags thereof are set to 1, to perform geometry encoding.

The geometry reconstruction unit 204 may perform position reconstruction based on the position information outputted from the octree analysis unit 203 to obtain the reconstructed value of the position information of each point in the point cloud data.

The first arithmetic encoding unit 205 can perform arithmetic encoding on the position information output from the octree analysis unit 203 through entropy encoding, i.e., the geometry bitstream is generated through by performing arithmetic encoding on the position information output from the octree analysis unit 203. The geometry bitstream can also be called a geometry code stream.

The attribute encoding can be achieved with the following units: a color transform unit 210, an attribute transfer unit 211, a region adaptive hierarchical transform (RAHT) unit 212, a predicting transform unit 213, and a lifting transform unit 214, a coefficient quantization unit 215, and a second arithmetic encoding unit 216.

It should be noted that, the point cloud encoder 200 may include more, fewer, or different functional components than illustrated in FIG. 2.

The color transform unit 210 can be used to transform an RGB color space of the points in the point cloud to YCbCr format or other formats.

The attribute transfer unit 211 can be used to transform the attribute information of the points in the point cloud to minimize attribute distortion. For example, the attribute transfer unit 211 may be used to obtain original values of the attribute information of the points. For example, the attribute information may be color information of the points.

After the original values of the attribute information of the points are obtained through transformation of the attribute transfer unit 211, any prediction unit can be selected to predict the points in the point cloud. The prediction unit can include the RAHT unit 212, the predicting transform unit 213, and the lifting transform unit 214.

In other words, any of the RAHT unit 212, the predicting transform unit 213, and the lifting transform unit 214 can be used to predict attribute information of a point in the point cloud to obtain a prediction value of the attribute information of the point, and further obtain a residual value of the attribute information of the point based on the prediction value of the attribute information of the point. For example, the residual value of the attribute information of the point may be the original value of the attribute information of the point minus the prediction value of the attribute information of the point.

In one implementation of the disclosure, the predicting transform unit 213 can also be used to generate a level of detail (LOD). The generation process of the LOD includes: obtaining Euclidean distances among the points according to the position information of the points in the point cloud, and partitioning the points into different detail representation layers (or called refinement levels) according to the Euclidean distances. In one implementation, the Euclidean distances can be sorted and then points corresponding to different ranges of Euclidean distances are partitioned into different detail representation layers. For example, a point can be randomly selected and classified into a first detail representation layer. Then, Euclidean distances between remaining points and the point are calculated, and points whose Euclidean distances satisfy a first threshold are classified into a second detail representation layer. The centroid of the points in the second detail representation layer is obtained, Euclidean distances between points other than the first detail representation layer and second detail representation layer and the centroid is calculated, and points whose Euclidean distances satisfy a second threshold are classified into a third detail representation layer. The above is continued until all points are classified into detail representation layers. The threshold value of the Euclidean distance can be adjusted, so that the number of points in each LOD layer is increasing. It should be understood that, the LOD partition can be achieved in other ways, which is not limited in the disclosure.

It should be noted that, the point cloud can be directly partitioned into one or more detail representation layers, or the point cloud can be first partitioned into multiple point cloud slices, and each point cloud slice can be partitioned into one or more LOD layers.

For example, the point cloud can be partitioned into multiple point cloud slices, and the number of points in each point cloud slice can range from 550,000 to 1.1 million. Each point cloud slice can be viewed as a separate point cloud. Each point cloud slice can be partitioned into multiple detail representation layers, where each detail representation layer includes multiple points. In one implementation, the partition of detail representation layer is based on the Euclidean distance among points.

The quantization unit 215 may be used to quantize the residual values of the attribute information of the points. For example, if the quantization unit 215 is connected with the predicting transform unit 213, the quantization unit may be used to quantize a residual value of attribute information of a point output from the predicting transform unit 213.

For example, the residual value of the attribute information of the point output from the predicting transform unit 213 is quantized by using the quantization step size, to improve system performance.

The second arithmetic encoding unit 216 may perform entropy encoding on the residual value of the attribute information of the point using zero run length coding, to obtain the attribute bitstream. The attribute bitstream may be bitstream information.

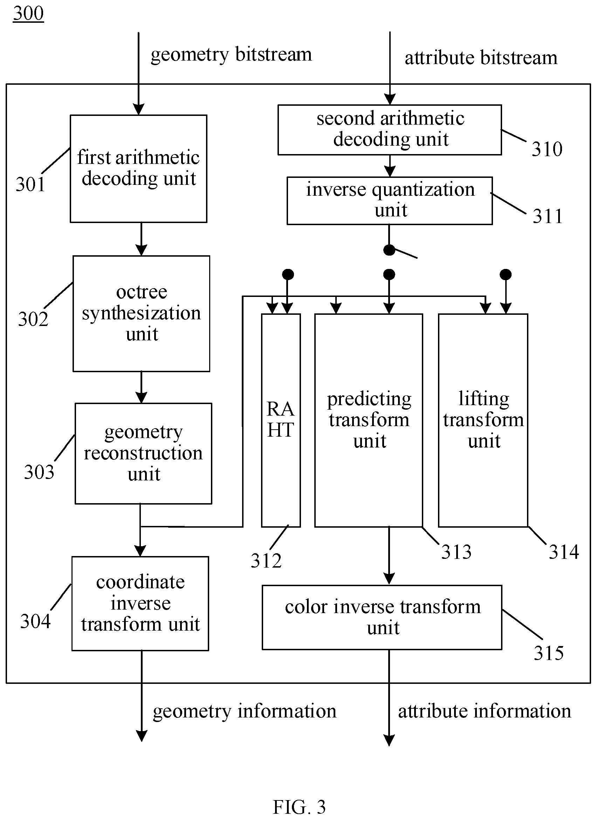

FIG. 3 is a schematic block diagram of a decoder 300 provided in implementations of the disclosure.

As illustrated in FIG. 3, the decoder 300 can obtain a bitstream of a point cloud from an encoding device and obtain position information and attribute information of points in the point cloud by parsing the bitstream. The decoding of the point cloud includes position decoding and attribute decoding.

The process of position decoding includes: performing arithmetic decoding on the geometry bitstream; performing synthetization after constructing an octree, and reconstructing the position information of the points, to obtain reconstructed information of the position information of the points; and performing coordinate transformation on the reconstructed information of the position information of the points to obtain the position information of the points. The position information of the points may also be referred to as geometry information of the points.

The process of attribute decoding includes: parsing the attribute bitstream to obtain residual values of the attribute information of the points in the point cloud; performing inverse quantization on the residual values of the attribute information of the points, to obtain residual values of the attribute information of the points after inverse quantization; based on the reconstructed information of the position information of the points obtained during position decoding, selecting one of the following three prediction modes: RAHT, predicting transform, and lifting transform to perform point cloud prediction, to obtain prediction values; obtaining reconstructed values of the attribute information of the points by adding the prediction values and residual values; and performing color space inverse transformation on the reconstructed values of the attribute information of the points, to obtain the decoded point cloud.

As illustrated in FIG. 3, the position decoding can be achieved with the following units: a first arithmetic decoding unit 301, an octree synthesization unit 302, a geometry reconstruction unit 303, and a coordinate inverse transform unit 304.

The attribute decoding can be achieved with the following units: a second arithmetic decoding unit 310, an inverse quantization unit 311, an RAHT unit 312, a predicting transform unit 313, a lifting transform unit 314, and a color inverse transform unit 315.

It should be noted that, decompression is the inverse process of compression, and similarly, functions of various units in the decoder 300 can be referred to the functions of corresponding units in the encoder 200. Furthermore, the point cloud decoder 300 may include more, fewer, or different functional components than illustrated in FIG. 3.

For example, at the decoder 300, the point cloud can be partitioned into LODs based on Euclidean distances among points in the point cloud, and then attribute information of the points in the LODs is decoded sequentially. For example, the number of zeros (zero_cnt) in the zero run length coding technique is calculated, to decode a residual value based on the number of zeros, and then at the decoder 200, inverse quantization may be performed on the decoded residual value, and a reconstructed value of the current point is obtained by adding the residual value after inverse quantization and a prediction value of the current point, until all points are decoded. The current point will be used as the nearest neighbouring point of a subsequent point(s) in the LOD, and the reconstructed value of the current point will be used to predict attribute information of the subsequent point.

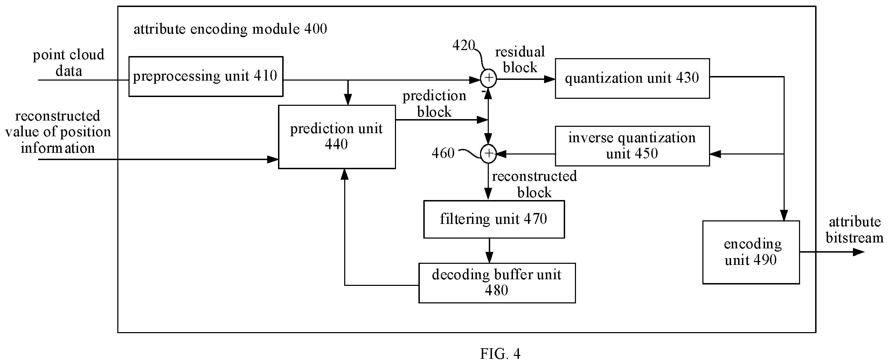

As can be seen from FIG. 2 above, the point cloud encoder 200 mainly includes two parts in terms of function: a position encoding module and an attribute encoding module, where the position encoding module is configured to achieve the encoding of the position information of the point cloud to form the geometry bitstream, and the attribute encoding module is configured to achieve the encoding of the attribute information of the point cloud to form the attribute bitstream. The disclosure mainly relates to the encoding of the attribute information, and the attribute encoding module in the point cloud encoder involved in the disclosure is described below in conjunction with FIG. 4.

FIG. 4 is a partial block diagram of an attribute encoding module 400 involved in implementations of the disclosure. The attribute encoding module 400 can be understood as the unit used to implement the encoding of the attribute information in the point cloud encoder 200 illustrated in FIG. 2 above. As illustrated in FIG. 4, the attribute encoding module 400 includes: a preprocessing unit 410, a residual unit 420, a quantization unit 430, a prediction unit 440, an inverse quantization unit 450, a reconstruction unit 460, a filtering unit 470, a decoding buffer unit 480, and an encoding unit 490. It is to be noted that the attribute encoding module 400 may also include more, fewer, or different functional components.

In some implementations, the preprocessing unit 410 may include the color transform unit 210 and the attribute transfer unit 211 illustrated in FIG. 2.

In some implementations, the quantization unit 430 may be understood as the coefficient quantization unit 215 in FIG. 2 above, and the encoding unit 490 may be understood as the second arithmetic encoding unit 216 in FIG. 2 above.

In some implementations, the prediction unit 440 may include the RAHT 212, the predicting transform unit 213, and the lifting transform unit 214 illustrated in FIG. 2. The prediction unit 440 is specifically configured to obtain the reconstructed information of the position information of the points in the point cloud, and based on the reconstructed information of the position information of the points, select any one of the RAHT 212, the predicting transform unit 213, and the lifting transform unit 214 to predict the attribute information of the points in the point cloud, to obtain the prediction values of the attribute information of the points.

The residual unit 420 may be configured to obtain the residual values of the attribute information of the points in the point cloud based on the original values of the attribute information of the points in the point cloud and the reconstructed values of the attribute information. For example, the original values of the attribute information of the points minus the reconstructed values of the attribute information is the residual values of the attribute information of the points.

The quantization unit 430 may be configured to quantize the residual value of the attribute information, specifically, the quantization unit 430 may quantize the residual value of the attribute information of the point based on the quantization parameter (QP) value associated with the point cloud. The point cloud encoder may adjust the degree of quantization for the point by adjusting the QP value associated with the point cloud.

The inverse quantization unit 450 may be configured to apply inverse quantization to the quantized residual values of the attribute information respectively, to reconstruct the residual values of the attribute information from the quantized residual values of the attribute information.

The reconstruction unit 460 may be configured to add the reconstructed residual values of the attribute information to the prediction values generated by the prediction unit 440 to obtain the reconstructed values of the attribute information of the points in the point cloud.

The filtering unit 470 is configured to eliminate or reduce noise in the reconstruction operation.

The decoding buffer unit 480 may be configured to store the reconstructed values of the attribute information of the points in the point cloud. The prediction unit 440 may be configured to predict the attribute information of other points with the reconstructed values of the attribute information of the points.

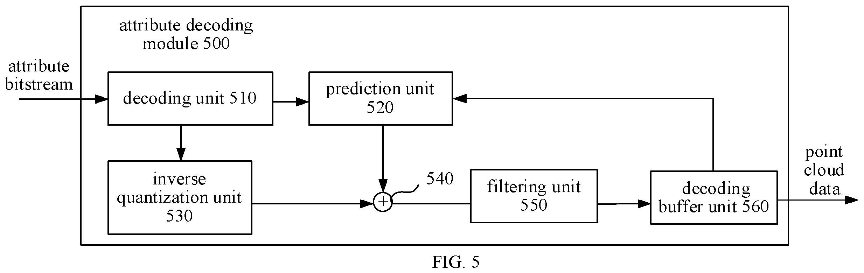

As can be seen from FIG. 3 above, the point cloud decoder 300 mainly includes two parts in terms of function: a position decoding module and an attribute decoding module, where the position decoding module is configured to achieve the decoding of the geometry bitstream of the point cloud to obtain the position information of the points, and the attribute decoding module is configured to achieve the decoding of the attribute bitstream of the point cloud to obtain the attribute information of the points. The attribute decoding module in the point cloud decoder involved in the disclosure is described below in conjunction with FIG. 5.

FIG. 5 is a partial block diagram of an attribute decoding module 500 involved in implementations of the disclosure. The attribute decoding module 500 can be understood as the unit configured to implement the decoding of the attribute bitstream in the point cloud decoder 300 illustrated in FIG. 3 above. As illustrated in FIG. 5, the attribute decoding module 500 includes: a decoding unit 510, a prediction unit 520, an inverse quantization unit 530, a reconstruction unit 540, a filtering unit 550, and a decoding buffer unit 560. It is to be noted that the attribute decoding module 500 may include more, fewer, or different functional components.

The attribute decoding module 500 may be configured to receive the attribute bitstream. The decoding unit 510 may be configured to parse the attribute bitstream to extract syntax elements from the attribute bitstream. As a part for parsing the attribute bitstream, the decoding unit 510 is configured to parse the encoded syntax elements in the attribute bitstream. The prediction unit 520, the inverse quantization unit 530, the reconstruction unit 540, and the filtering unit 550 may be configured to decode the attribute information according to the syntax elements extracted from the attribute bitstream.

In some implementations, the prediction unit 520 may be configured to determine a prediction mode for the point according to one or more syntax elements parsed from the bitstream and predict the attribute information of the point with the determined prediction mode.

The inverse quantization unit 530 may be configured to perform inverse quantization (i.e., de-quantize) the quantized residual values of the attribute information associated with the points in the point cloud to obtain the residual values of the attribute information of the points. The inverse quantization unit 530 may be configured to use the QP value associated with the point cloud to determine the degree of quantization.

The reconstruction unit 540 is configured to reconstruct the attribute information of the points in the point cloud by using the residual values of the attribute information of the points in the point cloud and the prediction values of the attribute information of the points in the point cloud. For example, the reconstruction unit 540 may be configured to add the residual values of the attribute information of the points in the point cloud to the prediction values of the attribute information of the points to obtain the reconstructed values of the attribute information of the points.

The filter unit 550 is configured to eliminate or reduce noise in the reconstruction operation.

The attribute decoding module 500 may be configured to store the reconstructed values of the attribute information of the points in the point cloud into the decoding buffer unit 560. The attribute decoding module 500 may use the reconstructed values of the attribute information in the decoding buffer unit 560 as reference points for subsequent prediction, or transmit the reconstructed values of the attribute information to the display device for presentation.

The basic process of encoding and decoding of the attribute information of the point cloud is as follows. At the encoding end, the attribute information of the point cloud data is preprocessed to obtain the original values of the attribute information of the points in the point cloud. The prediction unit 410, based on the reconstructed values of the position information of the points in the point cloud, selects one of the above three prediction modes to predict the attribute information of the points in the point cloud to obtain the prediction values of the attribute information. The residual unit 420 calculates the residual values of the attribute information based on the original values of the attribute information of the points in the point cloud and the prediction values of the attribute information, i.e., the differences between the original values of the attribute information of the points in the point cloud and the prediction values of the attribute information are used as the residual values of the attribute information of the points in the point cloud. The quantization unit 430 quantizes the residual values, so that information that is insensitive to the human eye can be removed, to eliminate visual redundancy. The encoding unit 490 receives the quantized residual values of the attribute information output by the quantization unit 430, and may encode the quantized residual values of the attribute information to output the attribute bitstream.

Furthermore, the inverse quantization unit 450 may receive the quantized residual values of the attribute information output by the quantization unit 430 and perform inverse quantization on the quantized residual values of the attribute information to obtain the residual values of the attribute information of the points in the point cloud. The reconstruction unit 460 obtains the residual values of the attribute information of the points in the point cloud output by the inverse quantization unit 450 and the prediction values of the attribute information of the points in the point cloud output by the prediction unit 410, and obtains the reconstructed values of the attribute information of the points by adding the residual values of the attribute information of the points in the point cloud to the prediction values. The reconstructed values of the attribute information of the points are filtered by the filtering unit 470 and then buffered in the decoding buffer unit 480, for the subsequent prediction process of other points.

At the decoding end, the decoding unit 510 parses the attribute bitstream to obtain the quantized residual values of the attribute information of the points in the point cloud, prediction information, quantization coefficients, etc. The prediction unit 520 predicts the attribute information of the points in the point cloud based on the prediction information to generate the prediction values of the attribute information of the points. The inverse quantization unit 530 performs inverse quantization on the quantized residual values of the attribute information of the points by using the quantization coefficients obtained from the attribute bitstream, to obtain the residual values of the attribute information of the points. The reconstruction unit 440 adds the prediction values of the attribute information of the points to the residual values, to obtain the reconstructed values of the attribute information of the points. The filtering unit 550 filters the reconstructed values of the attribute information of the points to obtain the decoded attribute information.

It should be noted that, mode information or parameter information such as the prediction, quantization, encoding, filtering determined by the encoding end when encoding the attribute information is carried in the attribute bitstream when necessary. The decoding end determines the same mode information or parameter information such as the prediction, quantization, encoding, filtering as that at the encoding end by parsing the attribute bitstream and analyzing the existing information, to ensure that the reconstructed values of the attribute information obtained at the encoding end is same as the reconstructed values of the attribute information obtained at the decoding end.

The above is the basic process of the point cloud encoder and decoder based on G-PCC encoding and decoding framework. With the development of technology, some modules or operations of the framework or process may be optimized, and the disclosure is applied to the basic process of the point cloud encoder and decoder based on G-PCC encoding and decoding framework but is not limited to the framework and process.

The point cloud encoding system, the point cloud encoder, and the point cloud decoder involved in the implementations of the disclosure are described above. Based on this, the technical solutions provided in the implementations of the disclosure are described in detail below in conjunction with specific implementations.

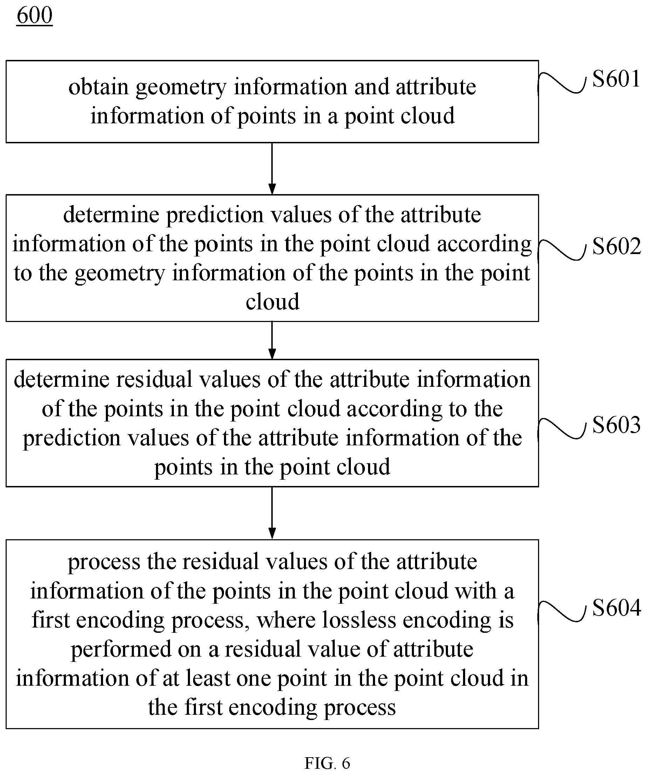

The encoding end is described below in conjunction with FIG. 6.

FIG. 6 is a schematic flow chart of a point cloud encoding method 600 provided in implementations of the disclosure. Implementations of the disclosure are applied to the point cloud encoder illustrated in FIG. 1, FIG. 2, and FIG. 4. As illustrated in FIG. 6, the method of implementations of the disclosure includes the following.

At S601, geometry information and attribute information of points in a point cloud are obtained.

The point cloud includes multiple points, and each point can include geometry information of the point and attribute information of the point. The geometry information of the point may also be referred to as position information of the point, and the position information of the point may be three-dimensional coordinate information of the point. The attribute information of the point may include color information and/or reflectivity, etc.

In one example, the point cloud encoder may take the obtained original attribute information of the points in the point cloud as original values of the attribute information of the points.

In another example, as illustrated in FIG. 2, after obtaining the original attribute information of the points in the point cloud, the point cloud encoder performs color space transformation on the original attribute information, such as transforming the RGB color space of the points to YCbCr format or other formats. The attribute transformation is performed on the points after color space transformation to minimize the attribute distortion and obtain the original values of the attribute information of the points.

At S602, prediction values of the attribute information of the points in the point cloud are determined according to the geometry information of the points in the point cloud.

For example, the geometry information of the points in the point cloud is encoded to obtain the reconstructed values of the geometry information of the points in the point cloud. According to the reconstructed values of the geometry information of the points in the point cloud, the prediction values of the attribute information of the points in the point cloud are determined.

It should be noted that, after completing the encoding of the geometry information of the points in the point cloud, the point cloud encoder encodes the attribute information of the points in the point cloud. Referring to FIG. 2, in the process of encoding the geometry information, the first arithmetic encoding unit 205 encodes the geometry information of the points processed by the octree unit 203 to form the geometry bitstream, and the geometry reconstruction unit 204 reconstructs the geometry information of the points processed by the octree unit 203 to obtain the reconstructed values of the geometry information. The prediction unit can obtain the reconstructed values of the geometry information output by the geometry reconstruction unit 204.

For example, according to the reconstructed values of the geometry information of the points in the point cloud, the points in the point cloud are sorted to obtain the sorted point cloud. For example, Morton codes of the points is determined according to the reconstructed values of the geometry information of the points in the point cloud, and the points in the point cloud are sorted according to the Morton codes, to obtain a Morton order of the points. For a target point in the sorted point cloud, at least one neighbouring point of the target point is obtained from the points whose attribute information has been encoded, and the prediction value of the attribute information of the target point is predicted according to the reconstructed value of the attribute information of the at least one neighbouring point.

The manner to predict the prediction value of the attribute information of the target point according to the reconstructed value of the attribute information of the at least one neighbouring point of the target point includes, but is not limited to, the following.

For manner 1, the average of the reconstructed values of the attribute information of the at least one neighbouring point is used as the prediction value of the attribute information of the target point.

For manner 2, assuming that the at least one neighbouring point are K neighbouring points, the reconstructed value of the attribute information of each of the K neighbouring points is used as the prediction reference value of the target point, to obtain K prediction reference values. Furthermore, the average of the reconstructed values of the attribute information of the K neighbouring points is used as another prediction reference value of the target point. As such, there are (K+1) prediction reference values for the target point in total. The rate distortion optimization (RDO) cost corresponding to each of the (K+1) prediction reference values is calculated, and the prediction reference value with the lowest RDO cost is used as the prediction value of the attribute information of the target point.

At S603, residual values of the attribute information of the points in the point cloud are determined according to the prediction values of the attribute information of the points in the point cloud.

For example, the differences between the original values of the attribute information of the points in the point cloud and the prediction values of the attribute information are determined as the residual values of the attribute information of the points in the point cloud.

For example, for a point in the point cloud, the prediction value of the attribute information of the point and the original value of the attribute information can be obtained according to the above steps, and the difference between the original value of the attribute information of the point and the prediction value of the attribute information is taken as the residual value of the attribute information of the point.

For example, the residual value of the attribute information of the point is determined according to the following formula (1):

$$\mathrm{attrResidual} = \mathrm{attrValue} - \mathrm{attrPredValue} \quad (1),$$

where attrResidual is the residual value of the attribute information, attrValue is the original value of the attribute information, and attrPredValue is the prediction value of the attribute information.

At S604, the residual values of the attribute information of the points in the point cloud are processed with a first encoding process, where lossless encoding is performed on a residual value of attribute information of at least one point in the point cloud in the first encoding process.

Referring to FIG. 4, at present, in the process of encoding the attribute information, the residual unit 420 calculates the residual values of the attribute information based on the original values of the attribute information of the points in the point cloud and the prediction values of the attribute information. The quantization unit 430 quantizes the residual values, so that information that is insensitive to the human eye can be removed, to eliminate visual redundancy. The inverse quantization unit 450 may receive the quantized residual values of the attribute information output by the quantization unit 430 and perform inverse quantization on the quantized residual values of the attribute information to obtain the residual values of the attribute information of the points in the point cloud. The reconstruction unit 460 obtains the residual values of the attribute information of the points in the point cloud output by the inverse quantization unit 450 and the prediction values of the attribute information of the points in the point cloud output by the prediction unit 410, and obtains the reconstructed values of the attribute information of the points by adding the residual values of the attribute information of the points in the point cloud to the prediction values. The reconstructed values of the attribute information of the points are buffered in the decoding buffer unit 480, for the subsequent prediction process of other points.

As can be seen from the above, at present, in the process of encoding the attribute information, the residual values of the attribute information of the points are quantized. However, the quantization causes errors in the reconstructed values of the attribute information, which further reduces the accuracy of the subsequent attribute information prediction, thereby reducing the overall encoding effect of the attribute information. To solve the technical problem, in the disclosure, the first encoding process is used to process the residual values of the attribute information of the points in the point cloud. That is, lossless encoding is performed on the residual value of the attribute information of the at least one point in the point cloud, to reduce the influence of quantization on the reconstructed value of the attribute information, which further improves the accuracy of the attribute information prediction without bringing significant influence on the size of the attribute bitstream, thereby improving the encoding effect of the attribute information.

It should be noted that, in the disclosure, lossless encoding on the residual values of the attribute information of the points can also be referred to as not performing quantization on the residual values of the attribute information of the points.

The number of points for which lossless encoding is performed on residual values of attribute information is not limited in the disclosure. For example, in the point cloud, residual values of attribute information of some points are quantized and residual values of attribute information of some other points are not quantized (i.e., lossless encoding is performed), or residual values of attribute information of all points in the point cloud are not quantized (i.e., lossless encoding is performed).

In one example, the at least one point for which lossless encoding is performed on the residual value of the attribute information may be N points.

Optionally, N is an integer multiple of 2. For example, lossless encoding is performed on the residual values of the attribute information of 2, 4, 16, or 24 points in the point cloud.

Optionally, the N points may be any N points in the point cloud, such as consecutive N points in the sorted point cloud, or randomly selected N points, or specified N points, or N points selected according to a preset point-selecting interval, where the point-selecting interval may be an uneven interval.

Optionally, each two neighbouring points in the N points have an equal interval. For example, the point cloud includes 1200 points, and if N is 24, the interval between each two neighbouring points in the 24 points is equal, which is 50 points.

In some implementations, lossless encoding is performed on residual values of attribute information of points spaced at the preset intervals in the point cloud according to the preset interval. For example, if the point cloud includes 1200 points and the preset interval is 10 points, lossless encoding is performed on residual values of attribute information of points spaced at 10 points in the sorted point cloud. Optionally, among the 1200 points, the 1st point can be used as the first point whose residual value of attribute information is not to be quantized, and the 11th point, spaced apart from the 1st point by 10 points, is used as the second point whose residual value of attribute information is not to be quantized, and so on. Optionally, among the 1200 points, the 11th point can be used as the first point whose residual value of attribute information is not quantized, and the 21th point, spaced at 10 points, is used as the second point whose residual value of attribute information is not quantized, and so on.

In practice, the above S604 can be implemented as follows.

For manner 1, in the process of quantizing the residual values of the attribute information of the points in the point cloud, the at least one point for which lossless encoding is performed on the residual value of the attribute information is skipped.

For manner 2, a quantization step size of the at least one point for which lossless encoding is performed on the residual value of the attribute information is set to be 1.

For example, at present, quantization is performed on the residual value of the attribute information of the point according to the following formula (2):

$$\mathrm{attrResidualQuant} = \frac{\mathrm{attrValue} - \mathrm{attrPredValue}}{\mathrm{Qstep}} \quad (2),$$

where attrResidualQuant is the quantized residual value of the attribute information and Qstep is the quantization step size.

In this manner, the quantization step size can be set to 1 for points where lossless encoding is performed on the residual values of the attribute information, i.e., Qstep=1.

For manner 3, a QP of the at least one point for which lossless encoding is performed on the residual value of the attribute information is set to be a target value, where the target value is a QP value corresponding to a quantization step size of 1.

Since the quantization step size is calculated from the QP value, the QP value is generally pre-configured through the profile. Based on this, the QP can be set to the QP value corresponding to the quantization step size of 1.

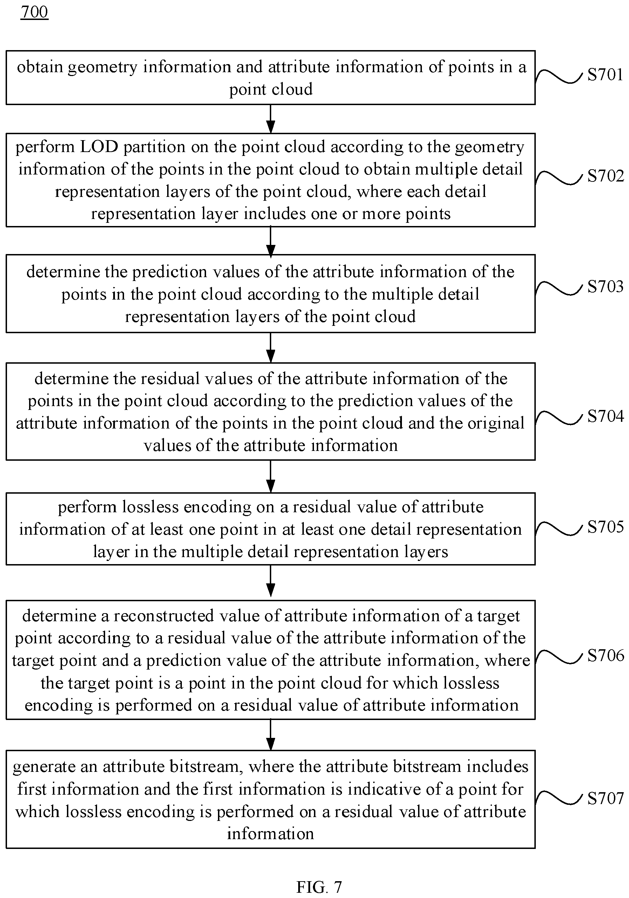

At present, the test platform: test model for category 1&3 version 5 (TMC13v5) provided by the MPEG adopts a LOD-based attribute information encoding manner. In conjunction with FIG. 7, the encoding method of the attribute information of the disclosure when the prediction mode of the attribute information of the implementations of the disclosure is the LOD-based prediction mode will be described below.

FIG. 7 is a schematic flow chart of a point cloud encoding method 700 provided in implementations of the disclosure.

At S701, geometry information and attribute information of points in a point cloud are obtained.

The implementation process of the above S701 is substantially the same as that of the above S601, and reference can be made to the description of the above S601, which will not be repeated herein.

At S702, LOD partition is performed on the point cloud according to the geometry information of the points in the point cloud to obtain multiple detail representation layers of the point cloud, where each detail representation layer includes one or more points.

In one example, Morton codes of the points are obtained according to the geometry information of the points in the point cloud, and a Morton order of the point cloud is obtained by sorting according to the Morton codes. The LOD partition is performed based on the Morton order of the point cloud.

In another example, the original order of the point cloud is obtained by sorting the point cloud according to the geometry information of the points in the point cloud. The LOD partition is performed based on the original order of the point cloud.

The LOD partition is performed on the sorted point cloud. For example, a point can be randomly selected from the sorted point cloud and classified into a first detail representation layer. Then, according to the geometry information, Euclidean distances between remaining points and the point are calculated, and points whose Euclidean distances satisfy a first threshold are classified into a second detail representation layer. The centroid of the points in the second detail representation layer is obtained, Euclidean distances between points other than the first detail representation layer and second detail representation layer and the centroid is calculated, and points whose Euclidean distances satisfy a second threshold are classified into a third detail representation layer. The above is continued until all points are classified into detail representation layers. The points in each detail representation layer are sorted in the detail representation layer according to the magnitude of the reconstructed values of the attribute information of the points.

It should be noted that, the above LOD partition is merely an example, the LOD partition can be achieved in other manners, which is not limited in the disclosure.

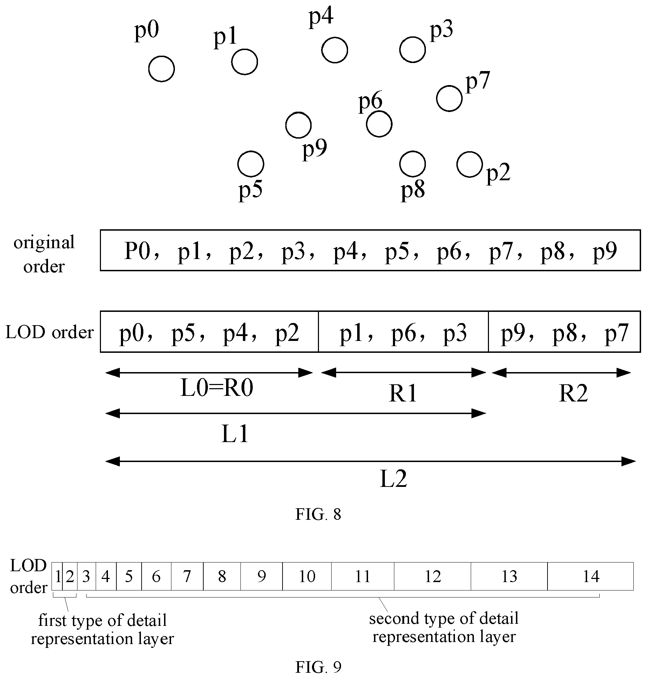

FIG. 8 is a schematic diagram of LOD partition of partial point cloud. FIG. 8 at the upper part illustrates 10 points: p0, p2, ......, p9 in the original point cloud. According to the geometry information of the 10 points, the 10 points are sorted to obtain an original order of the points p0, p2, ......., p9. Based on the original order of the points p0, p2, ......, p9, the LOD partition is performed on the points p0, p2, ......, p9 to obtain 3 detail representation layers, which do not overlap with each other. For example, the first detail representation layer R0 includes: p0, p5, p4, and p2, the second detail representation layer R1 includes: p1, p6, and p3, and the third detail representation layer R2 includes: p9, p8, and p7. The first detail representation layer R0 constitutes the first LOD, which is denoted as L0, the first LOD and the second detail representation layer R1 constitute the second LOD, which is denoted as L1, and the second LOD and the third detail representation layer R2 constitute the third LOD, which is denoted as L2. The number of points included in the LOD increases from layer to layer.

Referring to FIG. 8, the multiple detail representation layers obtained from LOD partition are sorted in an increasing order of the layer number, to obtain the LOD order of the point cloud. In some implementations, the multiple detail representation layers are sorted in a decreasing order of the layer number, to obtain the LOD order of the point cloud.

At S703, the prediction values of the attribute information of the points in the point cloud are determined according to the multiple detail representation layers of the point cloud.

For example, the multiple detail representation layers of the point cloud are sorted in an increasing order of the layer number, to obtain the LOD order of the point cloud, and the prediction values of the attribute information of the points in the point cloud are determined based on the LOD order of the point cloud.

In some implementations, a target point to-be-encoded in the point cloud is described as an example, and the above S703 includes, but is not limited to, the following manners.

For manner 1, at least one neighbouring point of the target point is obtained from the encoded points in the point cloud based on the LOD order of the point cloud. For example, 3 nearest neighbouring points of the target point are found from the encoded points in the point cloud according to the k-nearest neighbors (KNN) algorithm, and the weighted average of the reconstructed values of the attribute information of the 3 nearest neighbouring points is used as the prediction value of the attribute information of the target point.

For manner 2, based on the LOD order of the point cloud, at least one neighbouring point of the target point is obtained from the encoded points in the point cloud. For example, 3 nearest neighbouring points of the target point are found from the encoded points in the point cloud according to the KNN algorithm, and the reconstructed value of the attribute information of each of the 3 nearest neighbouring points is used as the prediction reference value of the target point to obtain 3 prediction reference values. In addition, the average of the reconstructed values of the attribute information of the 3 neighbouring points is used as another prediction reference value for the target point. As such, there are (3+1) prediction reference values for the target point in total. The RDO cost corresponding to each of the (3+1) prediction reference values is calculated, and the prediction reference value with the lowest RDO cost is used as the prediction value of the attribute information of the target point.

In one example, the reciprocal of the distance (e.g., Euclidean distance) between a neighbouring point and a target point can be used as the weight of the neighbouring point when determining the RDO cost.

In some implementations, prediction indexes corresponding to the (3+1) prediction reference values described above can be determined according to Table 1 below.

Table 1

| Prediction index | Predicted reference values |
|---|---|
| 0 | weighted average |
| 1 | P4 (first neighbouring point) |
| 2 | P5 (second neighbouring point) |
| 3 | P0 (third neighbouring point) |

For example, the target point is point p2 in FIG. 8, three neighbouring points closest to point p2 are p4, p5, and p1. p4 is the closest point to p2 among the three neighbouring points of target point p2, recorded as the first neighbouring point, i.e., 1st nearest point, and as illustrated in Table 1, its corresponding prediction index is 1. p5 is the second closest point to target point p2 among the three neighbouring points of target point p2, recorded as the second neighbouring point, i.e., 2nd nearest point, and as illustrated in Table 1, its corresponding prediction index is 2. p1 is the farthest point to target point p2 among the three neighbouring points of target point p2, recorded as the third neighbouring point, i.e., 3rd nearest point, and as illustrated in Table 1, its corresponding prediction index is 3. As illustrated in Table 1, the weighted average of the reconstructed values of the attribute information of p1, p4, p5 corresponds to the prediction index of 0.

According to the above method, the RDO cost corresponding to each of the (3+1) prediction reference values: the reconstructed value of the attribute information of p4, the reconstructed value of the attribute information of p5, the reconstructed value of the attribute information of p1, and the average of the reconstructed values of the attribute information of p4, p5, and p1 is calculated, and the prediction reference value with the lowest RDO cost is used as the prediction value of the attribute information of the target point. For example, the prediction reference value with the lowest RDO cost is the reconstructed value of the attribute information of p5.

Optionally, the point cloud encoder may carry the prediction index 2 corresponding to point p5 into the subsequently formed attribute bitstream. In this way, the decoding end can directly parse the attribute bitstream to obtain the prediction index 2 and can predict the attribute information of point p2 with the reconstructed value of the attribute information of point p5 corresponding to the prediction index 2 to obtain the prediction value of the attribute information of point p2.

At S704, the residual values of the attribute information of the points in the point cloud are determined according to the prediction values of the attribute information of the points in the point cloud and the original values of the attribute information. For example, for one target point in the point cloud, the difference between the original value of the attribute information of the target point and the prediction value is determined as the residual value of the attribute information of the target point.

At S705, lossless encoding is performed on a residual value of attribute information of at least one point in at least one detail representation layer in the multiple detail representation layers.

In some implementations, the above S705 can include the following. Lossless encoding is performed on the residual value of the attribute information of the at least one point in one detail representation layer in the multiple detail representation layers. Alternatively, lossless encoding is performed on the residual value of the attribute information of the at least one point in partial detail representation layers in the multiple detail representation layers, and quantization is performed on the residual value of the attribute information of each point in other partial detail representation layers in the multiple detail representation layers. Alternatively, lossless encoding is performed on the residual value of the attribute information of the at least one point in each detail representation layer in the multiple detail representation layers.

In some implementations, the above S705 includes S705-A1, S705-A2, and S705-A3.

At S705-A1, at least one first type of detail representation layer in which a total number of points is less than or equal to a first preset value and at least one second type of detail representation layer in which a total number of points is greater than the first preset value are obtained from the multiple detail representation layers. The first preset value is determined according to actual needs, which is not limited in the disclosure.

At S705-A2, lossless encoding is performed on residual values of attribute information of all points in the first type of detail representation layer.

At S705-A3, lossless encoding is performed on a residual value of attribute information of at least one point in the second type of detail representation layer.

As can be seen from the above, the number of points included in each layer of the multiple detail representation layers may be the same or different. Based on this, according to the total number of points included in each detail representation layer in the multiple detail representation layers, the multiple detail representation layers are partitioned into the first type of detail representation layer and the second type of detail representation layer, where the total number of points included in each first type of detail representation layer is less than or equal to the first preset value, and the total number of points included in each second type of detail representation layer is greater than the first preset value. For example, LOD partition is performed on the point cloud to obtain 14 detail representation layers. Assume that as the layer number increases, the numbers of points included in the detail representation layers are sequentially: 1, 6, 28, 114, 424, 1734, 10000 ....... Assuming that the first preset value is 24, as illustrated in FIG. 9, the first 2 detail representation layers (i.e., the first detail representation layer including 1 point and the second detail representation layer including 6 points) in the 14 detail representation layers are classified as the first type of detail representation layer to obtain 2 first type of detail representation layers, and the remaining 12 detail representation layers (i.e., the third detail representation layer including 28 points and the other detail representation layers after the third detail representation layer) in the 14 layers are classified as the second type of detail representation layer to obtain 12 second type of detail representation layers.

The residual values of the attribute information of all points in the first type of detail representation layer are not quantized. For example, lossless encoding is performed on the residual values of the attribute information of all points in each of the first 2 detail representation layers in the 14 detail representation layers.

The residual value of the attribute information of the at least one point in the second type of detail representation layer is not quantized. For example, lossless encoding is performed on the residual value of the attribute information of the at least one point in each of the last 12 detail representation layers in the 14 detail representation layers. In selecting the points for which lossless encoding is performed on the residual values of the attribute information, different second type of detail representation layers may use different skip quantization point-selecting manners, for example, each second type of detail representation layer has a different point-selecting manner. Optionally, different second type of detail representation layers may use the same skip quantization point-selecting manner, for example, each second type of detail representation layer has the same point-selecting manner.

In some implementations, for consistency of the encoding end and the decoding end, the encoding end may carry the relevant information on the first type of detail representation layer and the second type of detail representation layer into the attribute bitstream. In this way, the decoding end can parse the attribute bitstream to obtain the relevant information on the first type of detail representation layer and the second type of detail representation layer, and reconstruct the attribute information of the point according to the parsed relevant information on the first type of detail representation layer and the second type of detail representation layer.

In some implementations, if the number of points in each second type of detail representation layer for which lossless encoding is performed on residual values of attribute information is the same, the above S705-A3 includes S705-A3-1.

At S705-A3-1, lossless encoding is performed on residual values of attribute information of M points in the second type of detail representation layer, where M is a positive integer multiple of 2, e.g., 2, 4, 24, 32, etc.

Optionally, the interval between two neighbouring points in M points in one second type of detail representation layer is equal. For example, second type of detail representation layer 1 includes 200 points and second type of detail representation layer 2 includes 300 points. If M is equal to 10, lossless encoding is performed on the residual values of the attribute information of 20 points in second type of detail representation layer 1, which are sequentially the 1st point, the 11th point, the 21st point, the 31st point, ......, the 181st point, the 191st point, and two neighbouring points for which lossless encoding is performed on the residual values of the attribute information are spaced by 10 points. Lossless encoding is performed on the residual values of the attribute information of 30 points in second type of detail representation layer 2, which are sequentially: the 1st point, the 11th point, the 21st point, the 31st point, ......, the 281st point, and the 291st point, and two neighbouring points for which lossless encoding is performed on the residual values of the attribute information are spaced by 10 points.

In some implementations, according to the following programs, the M can be added to the attribute parameter set at the encoding end, to set specific values for the points at equal intervals that are unquantized in each second type of detail representation layer through the encoding parameter(s).

| attribute_parameter_set( ) { | Descriptor |
|---|---|
| ...... | |
| aps_chroma_qp_offset | se(v) |
| aps_equal_intervals_unquantized_num | ue(v) |
| aps_slice_qp_deltas_present_flag | u(1) |
| ...... | |
| } | |

aps_equal_intervals_unquantized_ num indicates the number of points at equal intervals that are unquantized in each second type of detail representation layer, e.g., 24.

In some implementations, if the at least one second type of detail representation layer includes L second type of detail representation layers and the numbers of points in different second type of detail representation layers for which lossless encoding is performed on residual values of attribute information may be different, the above S705-A3 includes S705-A3-2 and S705-A3-3.

At S705-A3-2, lossless encoding is performed on residual values of attribute information of a first number of points in each of P second type of detail representation layers.

At S705-A3-3, lossless encoding is performed on residual values of attribute information of a second number of points in each of Q second type of detail representation layers.

L is a positive integer greater than or equal to 2, P and Q each are positive integers and a sum of P and Q is less than or equal to L, the P second type of detail representation layers do not overlap with the Q second type of detail representation layers, and the first number is different from the second number.

The P second type of detail representation layers can be any P second type of detail representation layers among the L second type of detail representation layers, and the P second type of detail representation layers can be contiguous second type of detail representation layers or noncontiguous second type of detail representation layers.

The Q second type of detail representation layers can be any Q second type of detail representation layers other than the P second type of detail representation layers among the L second type of detail representation layers, and the Q second type of detail representation layers can be contiguous second type of detail representation layers or noncontiguous second type of detail representation layers.

For example, as illustrated in FIG. 9, L is equal to 12, and P (e.g., P=7) second type of detail representation layers are arbitrarily selected from the 12 second type of detail representation layers, and Q (e.g., Q=7) second type of detail representation layers are arbitrarily selected from the remaining 7 second type of detail representation layers.

In one example, the P second type of detail representation layers are first P second type of detail representation layers in the L second type of detail representation layers.

In one example, the Q second type of detail representation layers are last Q second type of detail representation layers in the L second type of detail representation layers.

Referring to FIG. 9, the first P (e.g., P=7) second type of detail representation layers in the 12 second type of detail representation layers are used as the P second type of detail representation layers, and the last Q (e.g., Q=7) second type of detail representation layers in the 12 second type of detail representation layers are used as the Q second type of detail representation layers. The P second type of detail representation layers are contiguous and the Q second type of detail representation layers are contiguous.

In some implementations, as illustrated in FIG. 9, if the multiple detail representation layers of the point cloud include 14 detail representation layers, P can be 7 or 8.

In one example, the last one second type of detail representation layer in the P second type of detail representation layers is adjacent to the first one second type of detail representation layer in the Q second type of detail representation layers. For example, as illustrated in FIG. 9, assume P=7 and Q=7, then the last one second type of detail representation layer in the P second type of detail representation layers is the seventh detail representation layer, the first one second type of detail representation layer in the Q second type of detail representation layers is the eighth detail representation layer, and the seventh detail representation layer is adjacent to the eighth detail representation layer.

According to the above method, the L second type of detail representation layers are partitioned into the P second type of detail representation layers and the Q second type of detail representation layers. For each of the P second type of detail representation layers, the residual values of the attribute information of points of the first number in the second type of detail representation layer are not quantized. For each of the Q second type of detail representation layers, the residual values of the attribute information of points of the second number in the second type of detail representation layer are not quantized.

If the P second type of detail representation layers precede the Q second type of detail representation layers, the first number is greater than the second number, for example, the first number is 24, 32, or 64, and the corresponding second number can be 8, 16, or 32. In the prediction process of the attribute information, for example, as illustrated in FIG. 8, the multiple detail representation layers are sorted according to the layer number from lowest to highest to obtain the LOD order of the point cloud, and the attribute information is encoded according to the LOD order of the point cloud. In the prediction process, the points ranked higher in the LOD order have a higher chance of being used as reference points in the subsequent prediction process. Therefore, to reduce the influence of quantization on the reconstructed values of the attribute information, the residual values of the attribute information of more points in the P second type of detail representation layers that are ranked higher are not quantized. To eliminate redundancy, the residual values of the attribute information of fewer points in the Q second type of detail representation layers that are ranked lower are not quantized.

In some implementations, the first number is a positive integer multiple of the second number, e.g., the first number is 3 times or 2 times the second number, e.g., the first number is 24 and the second number is 8.

In one example, the interval between two neighbouring points in the first number of points in each of the P second type of detail representation layers is equal.

In one example, the interval between two neighbouring points in the second number of points in each of the Q second type of detail representation layers is equal.

By adopting the above method, after lossless encoding is performed on residual values of attribute information of different numbers of points in different detail representation layers, the following S706 and S707 are performed. It should be noted that, S706 and S707 are not sequential in execution, and S706 can be executed before S707, after S707, or simultaneously with S707. The disclosure is not limited herein.

At S706, a reconstructed value of attribute information of a target point is determined according to a residual value of the attribute information of the target point and a prediction value of the attribute information, where the target point is a point in the point cloud for which lossless encoding is performed on a residual value of attribute information.

Since the residual value of the attribute information of the target point is not quantized, in the reconstruction process, it is unnecessary to perform inverse quantification on the residual value of the attribute information of the target point, and the reconstructed value of the attribute information of the target point can be determined directly according to the residual value and the prediction value of the attribute information of the target point.

For example, the reconstructed value of the attribute information of the target point is determined according to the following formula (4):

$$\mathrm{reconstructedColor} = \mathrm{attrResidual} + \mathrm{attrPredValue} \tag{4}$$

where reconstructedColor is the reconstructed value of the attribute information of the target point, also known as the reconstructed value of the color attribute information of the target point, attrPredValue is the prediction value of the attribute information of the target point, attrResidual is the residual value of the attribute information of the target point, and attrResidual can be obtained according to the following formula (5):

$$\mathrm{attrResidual} = \mathrm{attrValue} - \mathrm{attrPredValue} \tag{5}$$

where attrValue is the original value of the attribute information.

At S707, an attribute bitstream is generated, where the attribute bitstream includes first information and the first information is indicative of a point for which lossless encoding is performed on a residual value of attribute information.

In some implementations, the first information includes the flag information of the points for which lossless encoding is performed on the residual values of the attribute information. If the point cloud includes 100 points for which lossless encoding is performed on the residual values of the attribute information, the flag information of the 100 points is carried in the attribute bitstream. After the decoding end parses the attribute bitstream to obtain the flag information of the points for which lossless encoding is performed on the residual values of the attribute information and the residual values of the attribute information of the points, inverse quantization is not performed on the residual values of the attribute information of the points corresponding to the flag information, and the residual values of the attribute information of the points is directly used to reconstruct the attribute information, to keep consistency with the encoding end.

In some implementations, the first information includes the total number of points for which lossless encoding is performed on the residual values of the attribute information, such as N as described above.

In some implementations, if the number of points for which lossless encoding is performed on the residual values of the attribute information included in each of the L second type of detail representation layers is the same and the points are equally spaced, the first information includes the specific number (num) of equally spaced points for which lossless encoding is performed on the residual values of the attribute information in each second type of detail representation layer, i.e., num is carried in the attribute bitstream.

In this example, if a first point for which lossless encoding is performed on the residual value of the attribute information in the second type of detail representation layer is not the 1st point in the second type of detail representation layer, the first information further needs to carry the flag information of the first point for which lossless encoding is performed on the residual value of the attribute information.

In some implementations, if the points on which lossless encoding is performed in each of the P second type of detail representation layers and the Q second type of detail representation layers are equally spaced, the above first information also includes the first number and the second number, and the partition information of the P second type of detail representation layers and the Q second type of detail representation layers.

In this example, if the last one second type of detail representation layer in the P second type of detail representation layers is adjacent to the first one second type of detail representation layer in the Q second type of detail representation layers, the partition information further includes flag information of the first one second type of detail representation layer in the Q second type of detail representation layers, or includes flag information of the last one second type of detail representation layer in the P second type of detail representation layer, or includes P and/or Q. In this way, the decoding end can identify the P second type of detail representation layer and the Q second type of detail representation layer from the L second type of detail representation layers according to the information, and then performs lossless encoding on the residual values of the attribute information of equally spaced points of the first number in each of the P second type of detail representation layers and on the residual values of the attribute information of equally spaced points of the second numbers in each of the Q second type of detail representation layers.

In this example, the first information may further include the flag information of the first point of which the residual value of the attribute information is determined to be subject to lossless encoding in each second type of detail representation layer.

After the technical solution of the disclosure is implemented on the G-PCC reference software TMC13 V11.0, some of the point cloud test series (cat1-A and cat1-B) required by the MPEG are tested under the test condition such as the general test configuration CTC CY, and the test results are illustrated in Table 1.

| Point cloud series | End to end BD-AttrRate[%] | | |
|---|---|---|---|
| | Luma component (Luma) | Chroma component Cb | Chroma component Cr |
| cat1-A | -0.8% | -4.1% | -5.4% |
| cat1-B | -0.2% | -2.0% | -2.5% |
| Average value | -0.5% | -3.0% | -3.9% |

The points in the cat1-A point cloud series include color attribute information and other attribute information, such as reflectance attribute information, and the points in the cat1-B point cloud series include color attribute information. BD-AttrRate is one of the main parameters for evaluating the performance of the video encoding algorithm, which indicates the change in bitrate and peak signal to noise ratio (PSNR) of the video encoded by the new algorithm (i.e., the technical solution of the disclosure) relative to the original algorithm, that is, the change in bitrate between the new algorithm and the original algorithm under the same signal to noise ratio. "-" indicates improvement in performance, such as improvement in bitrate and PSNR performance. As illustrated in Table 1, for the cat1-Apoint cloud series, by adopting the technical solution of the disclosure, compared with the original technology, the performance is improved by 0.8% in the luma component, by 4.1% in the chroma component Cb, and by 5.4% in the chroma component Cr. The "average value" represents the average of the performance improvement of the cat1-A point cloud series and the cat1-B point cloud series.

Based on the above description of the point cloud encoding method involved in the implementations of the disclosure, the point cloud decoding method involved in the disclosure is described below with respect to the decoding end.

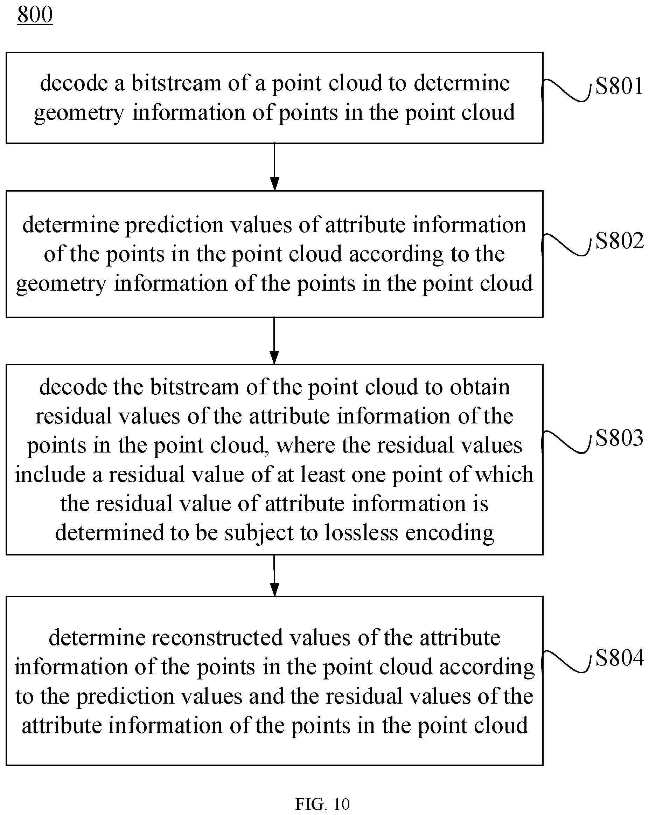

FIG. 10 is a schematic flow chart of a point cloud decoding method 800 provided in implementations of the disclosure. As illustrated in FIG. 10, the method of implementations of the disclosure includes the following.

At S801, a bitstream of a point cloud is decoded to determine geometry information of points in the point cloud.

It should be noted that, the decoding of the attribute information is executed after the decoding of the geometry information of the points in the point cloud is completed. After the decoding of the geometry bitstream is completed, the geometry information of the points in the point cloud can be obtained.

At S802, prediction values of attribute information of the points in the point cloud are determined according to the geometry information of the points in the point cloud.

Specifically, the geometry information of the points in the point cloud is decoded to obtain the reconstructed values of the geometry information of the points in the point cloud, and the prediction values of the attribute information of the points in the point cloud are determined according to the reconstructed values of the geometry information of the points in the point cloud. The implementation process of the above S802 can be referred to the description of the above S602 and will not be repeated herein.

At S803, the bitstream of the point cloud is decoded to obtain residual values of the attribute information of the points in the point cloud, where the residual values include a residual value of at least one point of which the residual value of attribute information is determined to be subject to lossless encoding.

In some implementations, the decoding process of the above S803 may be referred to as performing lossless decoding on the residual information of the attribute information of the points in the point cloud to obtain the residual values of the attribute information of the points in the point cloud. The lossless decoding on the residual values of the attribute information of the points can also be called not performing quantization on the residual values of the attribute information of the points, or as not performing scaling on the residual values of the attribute information of the points. The quantization on the residual values of the attribute information of the points is also called scaling on the residual values of the attribute information of the points.

In some implementations, the above S803 includes the following S803-A1 to S803-A3.

At S803-A1, the bitstream of the point cloud is decoded to obtain first information, where the first information is indicative of a point of which a residual value of attribute information is determined to be subject to lossless encoding.

The attribute bitstream of the point cloud is decoded to obtain the residual information of the attribute information of the points in the point cloud and the first information, where the first information is used to indicate the points whose residual values of the attribute information have been subject to lossless encoding (or are unquantized).

In one example, the first information includes flag information of the points whose residual values of the attribute information have been subject to lossless encoding, e.g., the encoding end uses different point-selecting modes to select the points whose residual values of the attribute information are not quantized, and the corresponding first information may include the numbers or indexes of the point-selecting modes of the points whose residual values of the attribute information are not quantized.

In another example, the first information includes a total number of points of which residual values of attribute information have been subject to lossless encoding.

At S803-A2, the bitstream of the point cloud is decoded to obtain residual information of attribute information of a point to-be-decoded in the point cloud, and whether the residual information of the attribute information of the point to-be-decoded in the point cloud is determined to be subject to lossless encoding is determined according to the first information.

At S803-A3, the residual information of the attribute information of the point to-be-decoded is determined as a residual value of the attribute information of the point to-be-decoded based on a determination that the residual information of the attribute information of the point to-be-decoded is determined to be subject to lossless encoding.

At S803-A4, residual information of the attribute information of the point to-be-decoded after inverse quantization, i.e., scaling, is determined as the residual value of the attribute information of the point to-be-decoded based on a determination that the residual information of the attribute information of the point to-be-decoded has been quantized.

In some implementations, in the above S803-A2, the manner to determine whether the residual information of the attribute information of the point to-be-decoded is subject to lossless encoding is different when the information carried by the first information is different. The implementation process includes but not limited to the following cases.

Case 1, the first information includes N, where N is a total number of points in the point cloud whose residual values of the attribute information have been subject to lossless encoding and N is an integer multiple of 2. Optionally, the interval between each two neighbouring points in N points is equal.

In this case, the above S803-A2 includes S803-A21.

At S803-A21, determine that the residual information of the attribute information of the point to-be-decoded is determined to be subject to lossless encoding based on a determination that the point to-be-decoded is one of the N points. For example, the points in the point cloud are sorted according to the geometry information of the points in the point cloud, to obtain the sorted point cloud. For the sorted point cloud, the interval between two neighbouring points in the N points is determined according to the total number of the points and the value of N, and according to the interval, whether the point to-be-decoded is one of the N points is determined. For example, the interval is 10, the point to-be-decoded is the 21st point in the sorted point cloud, and starting from the 1st point in the point cloud, the point that is 10 points spaced apart from the previous point is the point whose residual value of the attribute information is determined to be subject to lossless encoding, which are sequentially the 1st point, the 11th point, the 21st point ......, and thus the point to-be-decoded is determined to be the point whose residual information of the attribute information is determined to be subject to lossless encoding.

Case 2, the first information includes a preset interval, where the preset interval is the interval between two neighbouring points that are subject to lossless encoding in the point cloud.

In this case, the above S803-A2 includes S803-A22.

At S803- A22, determine that the residual information of the attribute information of the point to-be-decoded is determined to be subject to lossless encoding when determining, according to the preset interval, that an interval between the point to-be-decoded and a previous point of which a residual value of attribute information is determined to be subject to lossless encoding is equal to the preset interval.

In some implementations, if it is determined that the residual information of the attribute information of the point to-be-decoded is determined to be subject to lossless encoding, inverse quantization is not performed on the residual of the attribute information of the point to-be-decoded as follows, i.e., the above S803-A3 can be achieved as follows.

In manner 1, in the process of performing inverse quantization on the residual information of the attribute information of the points in the point cloud, the point to-be-decoded is skipped.

In manner 2, the inverse quantization step size of the point to-be-decoded is set to 1.

In manner 3, the QP of the point to-be-decoded is set as the target value, and the target value is the QP value corresponding to the inverse quantization step size of 1.

At S804, reconstructed values of the attribute information of the points in the point cloud are determined according to the prediction values and the residual values of the attribute information of the points in the point cloud.

Taking one point to-be-decoded in the point cloud as an example, if it is determined that the residual value of the attribute information of the point to-be-decoded is determined to be subject to lossless encoding at the encoding end, the decoding end determines to perform lossless decoding on the residual information of the attribute information of the point to-be-decoded. That is, the reconstructed value of the attribute information of the point to-be-decoded is determined by using the following formula (6):

$$\text{reconstructedColor} = \text{attrResidual} + \text{attrPredValue} \qquad (6)$$

where reconstructedColor is the reconstructed value of the attribute information of the point to-be-decoded, also called the reconstructed value of the color attribute information of the point to-be-decoded, attrPredValue is the prediction value of the attribute information of the point to-be-decoded, andattrResidual is the residual value of the attribute information of the point to-be-decoded.

If it is determined that the residual value of the attribute information of the point to-be-decoded is quantized at the encoding end, the decoding end determines to perform inverse quantization on the residual information of the attribute information of the point to-be-decoded. That is, the reconstructed value of the attribute information of the point to-be-decoded is determined by using the following formula (7):

$$\text{reconstructedColor} = \text{attrResidual} \times \text{Qstep} + \text{attrPredValue} \qquad (7),$$

where Qstep is the quantization step size.

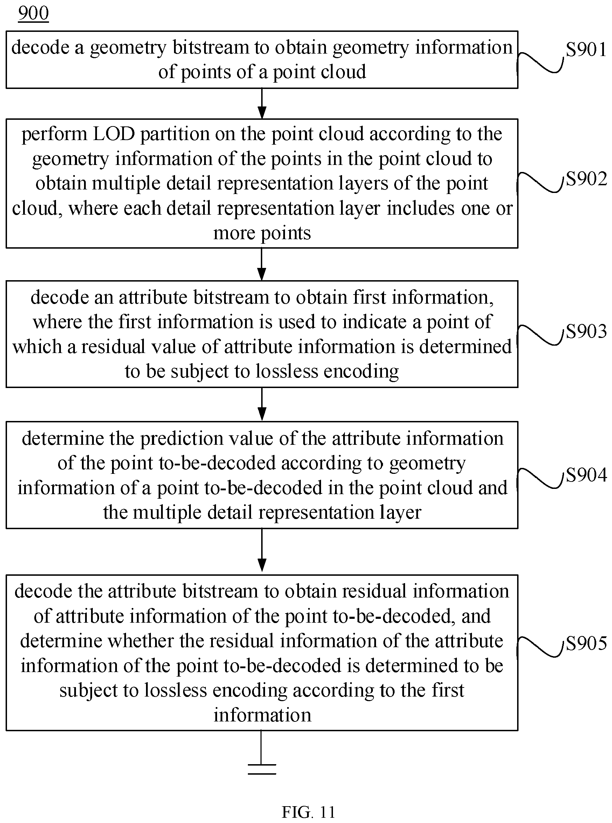

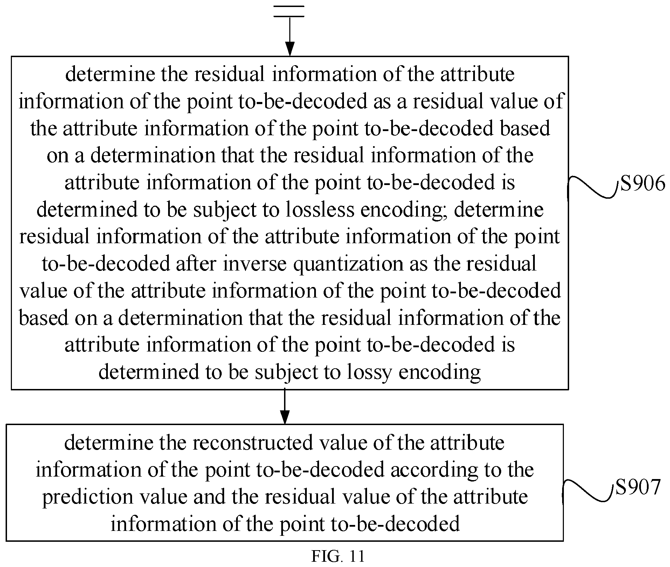

FIG. 11 is a schematic flow chart of a point cloud decoding method 900 provided in implementations of the disclosure. As illustrated in FIG. 11, the method of implementations of the disclosure includes the following.

At S901, a geometry bitstream is decoded to obtain geometry information of points of a point cloud.

At S902, LOD partition is performed on the point cloud according to the geometry information of the points in the point cloud to obtain multiple detail representation layers of the point cloud, where each detail representation layer includes one or more points.

At S903, an attribute bitstream is decoded to obtain first information, where the first information is used to indicate a point of which a residual value of attribute information is determined to be subject to lossless encoding.

At S904, the prediction value of the attribute information of the point to-be-decoded is determined according to geometry information of a point to-be-decoded in the point cloud and the multiple detail representation layers. For example, the points in the point cloud are sorted according to the multiple detail representation layers to obtain the LOD order, at least one decoded neighbouring point of the point to-be-decoded is obtained in the LOD order according to the geometry information of the point to-be-decoded, and the prediction value of the attribute information of the point to-be-decoded is determined according to the reconstructed value of the attribute information of the at least one decoded neighbouring point.

At S905, the attribute bitstream is decoded to obtain residual information of attribute information of the point to-be-decoded, and whether the residual information of the attribute information of the point to-be-decoded is determined to be subject to lossless encoding is determined according to the first information.

In this step, when the information carried by the first information is different, the implementation manner is different. The implementation process includes, but not limited to, the following.

In case 1, if the first information includes a first preset value, the first preset value is used to indicate: classifying the detail representation layer in which a total number of included points is less than or equal to the first preset value as a first type of detail representation layer and classifying the detail representation layer in which a total number of included points is greater than the first preset value as a second type of detail representation layer.

In this case, the above S905 includes S905-C1 and S905-C2.

At S905-C2, at least one first type of detail representation layer in which a total number of points is less than or equal to the first preset value and at least one second type of detail representation layer in which a total number of points is greater than the first preset value, according to the first preset value are obtained from the multiple detail representation layers.

At S905-C3, determine that the residual information of the attribute information of the point to-be-decoded is determined to be subject to lossless encoding when the point to-be-decoded belongs to the first type of detail representation layer.

In case 4, the first information includes M, where M is the number of points in one second type of detail representation layer of which residual values of attribute information is determined to be subject to lossless encoding and is a positive integer multiple of 2. Optionally, the interval between two neighbouring points in the M points is equal.

In this case, the above S905 includes S905-D1.

At S905-D1, determine that the residual information of the attribute information of the point to-be-decoded is determined to be subject to lossless encoding when the point to-be-decoded is one of the M points.

In case 5, the at least one second type of detail representation layer includes L second type of detail representation layers, and the first information includes a first number, a second number, and partition information of P second type of detail representation layers and Q second type of detail representation layers. The first number is the number of points in each of the P second type of detail representation layers of which the residual values of the attribute information have been subject to lossless encoding, and the second number is the number of points in each of the Q second type of detail representation layers of which the residual values of the attribute information have been subject to lossless encoding.

In one example, the first number is greater than the second number, for example, the first number is 24 and the second number is 8.

In one example, the first number is a positive integer multiple of the second number. For example, the first number is two times the second number, for example, the first number is 24 and the second number is 12. Alternatively, the first number is three times the second number, for example, the first number is 24 and the second number is 8.

In one example, the interval between two neighbouring points in the first number of points is equal.

In one example, the interval between two neighbouring points in the second number of points is equal.

In this case, the above S905 includes S905-E1 and S905-E2.

At S905-E1, determine that the residual information of the attribute information of the point to-be-decoded is determined to be subject to lossless encoding based on a determination that the point to-be-decoded is one of the first number of points in the P second type of detail representation layers of which residual values of attribute information have been subject to lossless encoding.

At S905-E2, determine that the residual information of the attribute information of the point to-be-decoded is determined to be subject to lossless encoding based on a determination that the point to-be-decoded is one of the second number of points in the Q second type of detail representation layers of which residual values of attribute information have been subject to lossless encoding.

L is a positive integer greater than or equal to 2, P and Q each are positive integers, and a sum of P and Q is less than or equal to L. The P second type of detail representation layers do not overlap with the Q second type of detail representation layers, and the first number is different from the second number.

In one example, the P second type of detail representation layers are first P second type of detail representation layers in the L second type of detail representation layers.

In one example, the Q second type of detail representation layers are last Q second type of detail representation layers in the L second type of detail representation layers.

In one example, the last one second type of detail representation layer in the P second type of detail representation layers is adjacent to the first one second type of detail representation layer in the Q second type of detail representation layers.

In this example, the partition information may include flag information of the first one second type of detail representation layer in the Q second type of detail representation layers, or include flag information of the last one second type of detail representation layer in the P second type of detail representation layers.

In some implementations, the first information further includes: flag information of a first point in the second type of detail representation layer of which a residual value of attribute information is determined to be subject to lossless encoding.

At S906, the residual information of the attribute information of the point to-be-decoded is determined as a residual value of the attribute information of the point to-be-decoded based on a determination that the residual information of the attribute information of the point to-be-decoded is determined to be subject to lossless encoding; residual information of the attribute information of the point to-be-decoded after inverse quantization is determined as the residual value of the attribute information of the point to-be-decoded based on a determination that the residual information of the attribute information of the point to-be-decoded is determined to be subject to lossy encoding (i.e., quantized).

At S907, the reconstructed value of the attribute information of the point to-be-decoded is determined according to the prediction value and the residual value of the attribute information of the point to-be-decoded.

It is to be understood that FIGS. 6, 7, 10 and 11 are merely examples of the disclosure and are not to be construed as limiting the disclosure.

The preferred implementations of the disclosure are described in detail above in conjunction with the accompanying drawings. However, the disclosure is not limited to the specific details in the above implementations. Within the technical conception of the disclosure, various simple variants of technical solutions of the disclosure can be made, and these simple variants all fall within the scope of protection of the disclosure. For example, each specific technical feature described in the above specific implementations can be combined in any suitable way without contradiction, and to avoid unnecessary repetition, the various possible combinations are not described separately in the disclosure. For another example, various implementations of the disclosure can also be combined in any way, and as long as they do not contradict the idea of the disclosure, they should also be considered as disclosed in the disclosure.

It should also be understood that in the various method implementations of the disclosure, the numbering of each process mentioned above does not imply the order of execution, and the order of execution of each process shall be determined by its function and inherent logic, which shall not constitute any limitation to the implementation process of the implementations of the disclosure. Furthermore, in implementations of the disclosure, the term "and/or" merely describes the relationship between associated objects, indicating that there can be three relationships. Specifically, "A and/or B" means: "A" exists alone, "A" and "B" exist at the same time, and "B" exists alone. The character "/" generally indicates that the relationship between associated objects is "or".

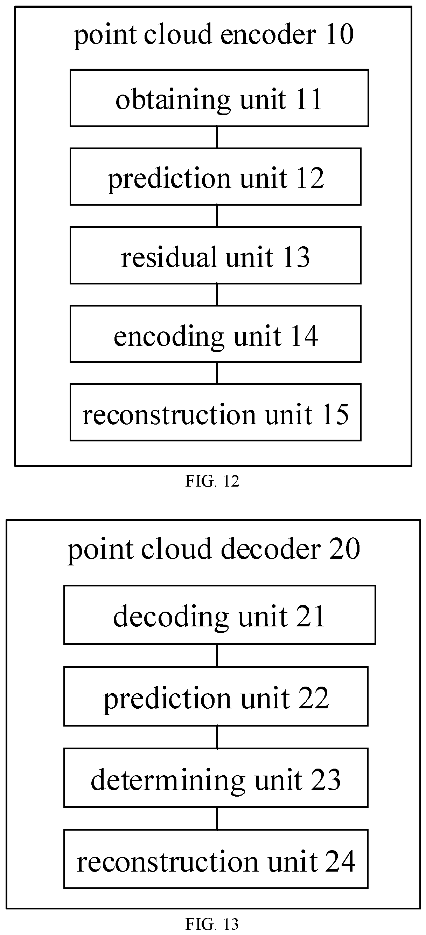

The method implementations of the disclosure are described in detail above in conjunction with FIG. 6 to FIG. 11, and the device implementations of the disclosure are described in detail below in conjunction with FIG. 12 to FIG. 14.

FIG. 12 is a schematic block diagram of a point cloud encoder 10 provided in implementations of the disclosure.

As illustrated in FIG. 12, the point cloud encoder 10 includes an obtaining unit 11, a prediction unit 12, a residual unit 13, and an encoding unit 14.

The obtaining unit 11 is configured to obtain geometry information and attribute information of points in a point cloud. The prediction unit 12 is configured to determine prediction values of the attribute information of the points in the point cloud according to the geometry information of the points in the point cloud. For example, the prediction unit 12 is configured to: encode the geometry information of the points in the point cloud to obtain reconstructed values of the geometry information of the points in the point cloud, and determine the prediction values of the attribute information of the points in the point cloud according to the reconstructed values of the geometry information of the points in the point cloud. The residual unit 13 is configured to determine residual values of the attribute information of the points in the point cloud according to the prediction values of the attribute information of the points in the point cloud. For example, the residual unit 13 is configured to determine differences between original values of the attribute information of the points in the point cloud and the prediction values of the attribute information as the residual values of the attribute information of the points in the point cloud. The encoding unit 14 is configured to process the residual values of the attribute information of the points in the point cloud with a first encoding process, lossless encoding being performed on a residual value of attribute information of at least one point in the point cloud in the first encoding process.

In some implementations, the encoding unit 14 is configured to perform lossless encoding on the residual value of the attribute information of the at least one point in the point cloud.

In some implementations, the at least one point includes N points.

Optionally, N is an integer multiple of 2.

Optionally, each two neighbouring points in the N points have an equal interval.

In some implementations, the encoding unit 14 is configured to perform, according to a preset interval, lossless encoding on residual values of attribute information of points spaced at preset intervals in the point cloud.

In some implementations, the encoding unit 14 is configured to: perform LOD partition on the point cloud according to the geometry information of the points in the point cloud to obtain multiple detail representation layers of the point cloud, where each detail representation layer includes one or more points, and perform lossless encoding on a residual value of attribute information of at least one point in at least one detail representation layer in the multiple detail representation layers.

In some implementations, the encoding unit 14 is configured to: obtain, from the multiple detail representation layers, at least one first type of detail representation layer in which a total number of points is less than or equal to a first preset value and at least one second type of detail representation layer in which a total number of points is greater than the first preset value, perform lossless encoding on residual values of attribute information of all points in the first type of detail representation layer, and perform lossless encoding on a residual value of attribute information of at least one point in the second type of detail representation layer.

In some implementations, the encoding unit 14 is configured to perform lossless encoding on residual values of attribute information of M points in the second type of detail representation layer, where M is a positive integer multiple of 2.

In some implementations, the at least one second type of detail representation layer includes L second type of detail representation layers, and the encoding unit 14 is configured to: perform lossless encoding on residual values of attribute information of a first number of points in each of P second type of detail representation layers; and perform lossless encoding on residual values of attribute information of a second number of points in each of Q second type of detail representation layers, where L is a positive integer equal to or greater than 2, P and Q each are positive integers and a sum of P and Q is less than or equal to L, the P second type of detail representation layers do not overlap with the Q second type of detail representation layers, and the first number is different from the second number.

In some implementations, the P second type of detail representation layers are first P second type of detail representation layers in the L second type of detail representation layers.

In some implementations, the Q second type of detail representation layers are last Q second type of detail representation layers in the L second type of detail representation layers.

In some implementations, the last one in the P second type of detail representation layers is adjacent to the first one in the Q second type of detail representation layers.

Optionally, the first number is greater than the second number.

Optionally, the first number is a positive integer multiple of the second number.

Optionally, each two neighbouring points in the first number of points have an equal interval.

Optionally, each two neighbouring points in the second number of points have an equal interval.

In some implementations, the point cloud encoder 10 further includes a reconstruction unit 15. The reconstruction unit 15 is configured to determine a reconstructed value of attribute information of a target point according to a residual value of the attribute information of the target point and a prediction value of the attribute information, where the target point is a point in the point cloud for which lossless encoding is performed on a residual value of attribute information.

In some implementations, the reconstruction unit 15 is configured to determine the reconstructed value of the attribute information of the target point according to the following formula:

$$\mathrm{reconstructedColor} = \mathrm{attrResidual} + \mathrm{attrPredValue},$$

where reconstructedColor is the reconstructed value of the attribute information of the target point, attrResidual is the residual value of the attribute information of the target point, and attrPredValue is the prediction value of the attribute information of the target point.

In some implementations, the encoding unit 14 is further configured to generate a bitstream, where the bitstream includes first information and the first information is indicative of a point for which lossless encoding is performed on a residual value of attribute information.

In some implementations, the first information includes flag information of the point for which lossless encoding is performed on the residual value of the attribute information.

In some implementations, the first information includes the total number of points for which lossless encoding is performed on residual values of attribute information.

In some implementations, the first information includes the first number, the second number, and partition information of the P second type of detail representation layers and the Q second type of detail representation layers.

In some implementations, when the last one in the P second type of detail representation layers is adjacent to the first one in the Q second type of detail representation layers, the partition information further includes flag information of the first one in the Q second type of detail representation layers or flag information of the last one in the P second type of detail representation layers.

In some implementations, the first information further includes flag information of a first point in the second type of detail representation layer for which lossless encoding is performed on a residual value of attribute information.

In some implementations, the encoding unit 14 is configured to: skip the at least one point for which lossless encoding is performed on the residual value of the attribute information, in the process of quantizing the residual values of the attribute information of the points in the point cloud; or set a quantization step size of the at least one point for which lossless encoding is performed on the residual value of the attribute information to be 1; or set a QP of the at least one point for which lossless encoding is performed on the residual value of the attribute information to be a target value, where the target value is a QP value corresponding to a quantization step size of 1.

In some implementations, the first information further includes the preset value.

It is to be understood that the device implementations and the method implementations may correspond to each other, and for similar description, reference may be made to the method implementations. To avoid repetition, details are not described herein again. Specifically, the point cloud encoder 10 illustrated in FIG. 12 can perform the method of implementations of the disclosure, and the foregoing and other operations and/or functions of the various units in the point cloud encoder 10 are intended to implement the corresponding procedures in methods such as methods 600 and 700 respectively, which will not be repeated herein for brevity.

FIG. 13 is a schematic block diagram of a point cloud decoder 20 provided in implementations of the disclosure.

As illustrated in FIG. 13, the point cloud decoder 20 includes a decoding unit 21, a prediction unit 22, a determining unit 23, and a reconstruction unit 24.

The decoding unit 21 configured to decode a bitstream of a point cloud to determine geometry information of points in the point cloud. The prediction unit 22 configured to determine prediction values of attribute information of the points in the point cloud according to the geometry information of the points in the point cloud. The determining unit 23 configured to decode the bitstream of the point cloud to obtain residual values of the attribute information of the points in the point cloud, where the residual values includes a residual value of at least one point of which the residual value of attribute information is determined to be subject to lossless encoding. The reconstruction unit 24 configured to determine reconstructed values of the attribute information of the points in the point cloud according to the prediction values and the residual values of the attribute information of the points in the point cloud.

In some implementations, the determining unit 23 is configured to: decode the bitstream of the point cloud to obtain first information, where the first information is indicative of a point of which a residual value of attribute information is determined to be subject to lossless encoding; decode the bitstream of the point cloud to obtain residual information of attribute information of a point to-be-decoded in the point cloud; determine whether the residual information of the attribute information of the point to-be-decoded in the point cloud is determined to be subject to lossless encoding according to the first information; determine the residual information of the attribute information of the point to-be-decoded as a residual value of the attribute information of the point to-be-decoded based on a determination that the residual information of the attribute information of the point to-be-decoded is determined to be subject to lossless encoding; and determine residual information of the attribute information of the point to-be-decoded after inverse quantization as the residual value of the attribute information of the point to-be-decoded based on a determination that the residual information of the attribute information of the point to-be-decoded is determined to be subject to lossy encoding.

In some implementations, the first information includes N, and N is a total number of points in the point cloud of which residual values of attribute information have been subject to lossless encoding.

Optionally, N is an integer multiple of 2.

Optionally, each two neighbouring points in N points have an equal interval.

In some implementations, the determining unit 23 is configured to: determine that the residual information of the attribute information of the point to-be-decoded is determined to be subject to lossless encoding based on a determination that the point to-be-decoded is one of the N points.

In some implementations, the determining unit 23 is configured to, if the first information includes a preset interval, determine that the residual information of the attribute information of the point to-be-decoded is determined to be subject to lossless encoding when determining, according to the preset interval, that an interval between the point to-be-decoded and a previous point of which a residual value of attribute information is determined to be subject to lossless encoding is equal to the preset interval.

In some implementations, the determining unit 23 is further configured to: perform LOD partition on the point cloud according to the geometry information of the points in the point cloud to obtain multiple detail representation layers of the point cloud, where each detail representation layer includes one or more points.

In some implementations, if the first information includes a first preset value, the determining unit 23 is configured to: obtain, from the multiple detail representation layers, at least one first type of detail representation layer in which a total number of points is less than or equal to the first preset value and at least one second type of detail representation layer in which a total number of points is greater than the first preset value, according to the first preset value; and determine that the residual information of the attribute information of the point to-be-decoded is determined to be subject to lossless encoding when the point to-be-decoded belongs to the first type of detail representation layer.

In some implementations, when the first information includes M and M is the number of points in one second type of detail representation layer of which residual values of attribute information is determined to be subject to lossless encoding and is a positive integer multiple of 2, the determining unit 23 is configured to: determine that the residual information of the attribute information of the point to-be-decoded is determined to be subject to lossless encoding when the point to-be-decoded is one of M points.

In some implementations, the at least one second type of detail representation layer includes L second type of detail representation layers, and if the first information includes a first number, a second number, and partition information of P second type of detail representation layers and Q second type of detail representation layers, the determining unit 23 is configured to: partition the L second type of detail representation layers into the P second type of detail representation layers and the Q second type of detail representation layers according to the partition information; determine that the residual information of the attribute information of the point to-be-decoded is determined to be subject to lossless encoding based on a determination that the point to-be-decoded is one of the first number of points in the P second type of detail representation layers of which residual values of attribute information have been subject to lossless encoding; and determine that the residual information of the attribute information of the point to-be-decoded is determined to be subject to lossless encoding based on a determination that the point to-be-decoded is one of the second number of points in the Q second type of detail representation layers of which residual values of attribute information have been subject to lossless encoding, where P and Q each are positive integers and a sum of P and Q is less than or equal to L, the P second type of detail representation layers do not overlap with the Q second type of detail representation layers, and the first number is different from the second number.

Optionally, the P second type of detail representation layers are first P second type of detail representation layers in the L second type of detail representation layers.

Optionally, the Q second type of detail representation layers are last Q second type of detail representation layers in the L second type of detail representation layers.

Optionally, the last one in the P second type of detail representation layers is adjacent to the first one in the Q second type of detail representation layers.

Optionally, when the last one in the P second type of detail representation layers is adjacent to the first one in the Q second type of detail representation layers, the partition information further includes flag information of the first one in the Q second type of detail representation layers or flag information of the last one in the P second type of detail representation layers.

Optionally, the first information further includes flag information of a first point in the second type of detail representation layer of which a residual value of attribute information is determined to be subject to lossless encoding.

Optionally, the first information further includes flag information of points of which residual values of attribute information have been subject to lossless encoding.

Optionally, the first number is greater than the second number.

Optionally, the first number is a positive integer multiple of the second number.

Optionally, each two neighbouring points in the first number of points have an equal interval.

Optionally, each two neighbouring points in the second number of points have an equal interval.

In some implementations, the reconstruction unit 24 is configured to determine a sum of a prediction value and the residual value of the attribute information of the point to-be-decoded as a reconstructed value of the attribute information of the point to-be-decoded.

In some implementations, the reconstruction unit 24 is configured to: determine the reconstructed value of the attribute information of the point to-be-decoded according to the following formula:

$$\mathrm{reconstructedColor} = \mathrm{attrResidual} + \mathrm{attrPredValue},$$

where reconstructedColor is the reconstructed value of the attribute information of the point to-be-decoded, attrResidual is the residual value of the attribute information of the point to-be-decoded, and attrPredValue is the prediction value of the attribute information of the point to-be-decoded.

In some implementations, the determining unit 23 is configured to: in the process of performing inverse quantization on the residual values of the attribute information of the points in the point cloud, skip the point to-be-decoded, set an inverse quantization step size of the point to-be-decoded to be 1, or set a QP of the point to-be-decoded to be a target value, where the target value is a QP value corresponding to an inverse quantization step size of 1.

It is to be understood that the device implementations and the method implementations may correspond to each other, and for similar description, reference may be made to the method implementations. To avoid repetition, details are not described herein again. Specifically, the point cloud decoder 20 illustrated in FIG. 20 may correspond to the corresponding subject in the method 800 and/or 900 of implementations of the disclosure, and the foregoing and other operations and/or functions of various units in the point cloud decoder 20 are intended to implement the corresponding procedures in methods such as the method 800 and/or 900 respectively, which will not be repeated herein for the sake of brevity.

The device and system of the implementations of the disclosure are described above in conjunction with the accompanying drawings from the aspect of the functional unit. It should be understood that, the functional units mentioned above may be implemented in the form of hardware, may be implemented by instructions in the form of software, or may be implemented in the form of a combination of software unit and hardware unit. Specifically, the operations of the method implementations in the implementations of the disclosure may be completed by a hardware integrated logical circuit in a processor, and/or by using instructions in a form of software. The operations of the methods disclosed with reference to the implementations of the disclosure may be directly performed and completed by using a hardware decoding processor, or may be performed and completed by using a combination of hardware and software unit in the decoding processor. Optionally, the software unit may be located in a mature storage medium in the field, such as a random access memory, a flash memory, a read-only memory, a programmable read-only memory, an electrically-erasable programmable memory, or a register. The storage medium is located in the memory. The processor reads information in the memory and completes the operations of the foregoing method implementations in combination with hardware thereof.

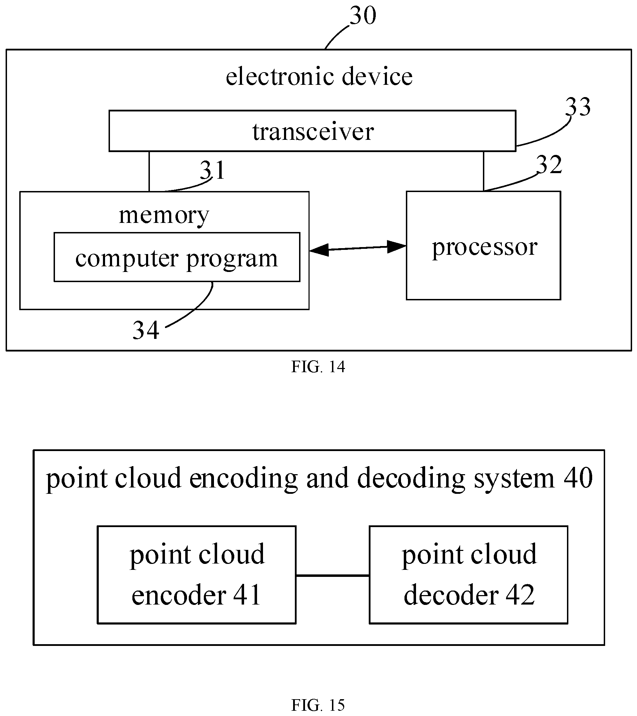

FIG. 14 is a schematic block diagram of an electronic device 30 provided in implementations of the disclosure.

As illustrated in FIG. 14, the electronic device 30 may be the point cloud encoder or the point cloud decoder as described in implementations of the disclosure. The electronic device 30 may include: a memory 33 and a processor 32. The memory 33 is configured to store a computer program 34 and transfer the computer program 34 to the processor 32. In other words, the processor 32 can invoke the computer program 34 from the memory 33 and run the computer program 34 to implement the method in implementations of the disclosure.

For example, the processor 32 may be used to perform the steps in the method 200 described above according to instructions in the computer program 34.

In some implementations of the disclosure, the processor 32 may include, but is not limited to: a general processor, a digital signal processor (DSP), an application-specific integrated circuit (ASIC), a field programmable gate array (FPGA), or another programmable logic device, a discrete gate, a transistor logic device, or a discrete hardware component.

In some implementations of the disclosure, the memory 33 includes, but is not limited to: a transitory memory and/or a non-transitory memory. The non-transitory memory may be an ROM, a programmable read-only memory (PROM), an erasable programmable read-only memory (EPROM), an electrically erasable programmable read-only memory (EEPROM) or a flash memory. The transitory memory may be an RAM, used as an external cache. Through exemplary but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct Rambus dynamic random access memory (direct Rambus RAM, DR RAM).

In some implementations of the disclosure, the computer program 34 may be divided into one or more units, and the one or more units are stored in the memory 33 and executed by the processor 32, to accomplish the methods provided in the disclosure. The one or more units may be a series of computer program instruction segments capable of performing a particular function, where the instruction segments are used to describe the execution process of the computer program 34 in the electronic device 30.

As illustrated in FIG. 14, the electronic device 30 may also include: a transceiver 33. The transceiver 33 may be connected with the processor 32 or the memory 33.

The processor 32 may be configured to control the transceiver 33 to communicate with other devices, specifically, to send information or data to other devices or to receive information or data from other devices. The transceiver 33 may include a transmitter and a receiver. The transceiver 33 may further include an antenna, and the number of antennas may be one or more.

It should be understood that the various components of the electronic device 30 are connected via a bus system, where the bus system includes a power bus, a control bus, and a status signal bus in addition to a data bus.

FIG. 15 is a schematic block diagram of a point cloud encoding and decoding system 40 provided in implementations of the disclosure.

As illustrated in FIG. 15, the point cloud encoding and decoding system 40 may include: a point cloud encoder 41 and a point cloud decoder 42, where the point cloud encoder 41 is used to perform the point cloud encoding method involved in implementations of the disclosure and the point cloud decoder 42 is used to perform the point cloud decoding method involved in implementations of the disclosure.

The disclosure also provides a computer storage medium. The computer storage medium includes a computer program stored thereon. The computer program, when executed by a computer, causes the computer to perform the method of the method implementations described above. Alternatively, implementations of the disclosure further provide a computer program product including instructions. When executed by a computer, the instructions cause the computer to perform the method of the method implementations described above.

When implemented by the software, it may be implemented completely or partially in a form of a computer program product. The computer program product includes one or more computer instructions. When the compute instructions are loaded and executed on the computer, the procedure or function according to implementations of the disclosure is generated completely or partially. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber or a digital subscriber line (DSL)) or wireless (for example, infrared, wireless, or microwave) manner. The computer-readable storage medium can be any available medium accessible by a computer or a data storage device such as a server or a data center that contains one or more available media integrated. The available media may be magnetic media (e.g., floppy disk, hard disk, magnetic tape), optical media (e.g., digital point cloud disc (DVD)), or semiconductor media (e.g., solid state disk (SSD)), etc.

A person of ordinary skill in the art may be aware that, the exemplary units and algorithm steps described with reference to the implementations disclosed herein can be implemented in electronic hardware, or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of the disclosure.

In the implementations provided in the disclosure, it will be appreciated that, the systems, apparatuses, and methods disclosed may also be implemented in various other manners. For example, the above device implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, mechanical, or otherwise.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations. For example, the functional units in various implementations of the disclosure may be integrated into one processing unit, or each unit may be physically present, or two or more units may be integrated into one unit.

The above is merely implementations of the disclosure, but are not intended to limit the protection scope of the disclosure. Any variation or substitution readily figured out by a person skilled in the art within the technical scope disclosed in the disclosure shall fall within the protection scope of the disclosure. Therefore, the protection scope of the disclosure shall be subject to the protection scope of the claims.

## Claims

**1.** A point cloud encoding method, comprising:

obtaining geometry information and attribute information of points in a point cloud;
determining prediction values of the attribute information of the points in the point cloud according to the geometry information of the points in the point cloud;
determining residual values of the attribute information of the points in the point cloud according to the prediction values of the attribute information of the points in the point cloud; and
processing the residual values of the attribute information of the points in the point cloud with a first encoding process, lossless encoding being performed on a residual value of attribute information of at least one point in the point cloud in the first encoding process.

**2.** The method of claim 1, wherein processing the residual values of the attribute information of the points in the point cloud with the first encoding process comprises:
performing lossless encoding on the residual value of the attribute information of the at least one point in the point cloud.

**3.** The method of claim 1, wherein the at least one point comprises N points and N is an integer multiple of 2.

**4.** The method of claim 1, wherein the at least one point comprises N points and each two neighbouring points in the N points have an equal interval.

**5.** The method of claim 1, wherein performing lossless encoding on the residual value of the attribute information of the at least one point in the point cloud comprises:
performing, according to a preset interval, lossless encoding on residual values of attribute information of points spaced at preset intervals in the point cloud.

**6.** The method of claim 1, wherein
the method further comprises:

performing level of detail (LOD) partition on the point cloud according to the geometry information of the points in the point cloud to obtain a plurality of detail representation layers of the point cloud, wherein each detail representation layer comprises one or more points; and
performing lossless encoding on the residual value of the attribute information of the at least one point in the point cloud comprises:
performing lossless encoding on a residual value of attribute information of at least one point in at least one detail representation layer in the plurality of detail representation layers.

**7.** The method of claim 6, wherein performing lossless encoding on the residual value of the attribute information of the at least one point in the at least one detail representation layer in the plurality of detail representation layers comprises:

obtaining, from the plurality of detail representation layers, at least one first type of detail representation layer in which a total number of points is less than or equal to a first preset value and at least one second type of detail representation layer in which a total number of points is greater than the first preset value;
performing lossless encoding on residual values of attribute information of all points in the first type of detail representation layer; and
performing lossless encoding on a residual value of attribute information of at least one point in the second type of detail representation layer.

**8.** The method of claim 7, wherein performing lossless encoding on the residual value of the attribute information of the at least one point in the second type of detail representation layer comprises:
performing lossless encoding on residual values of attribute information of M points in the second type of detail representation layer, wherein M is a positive integer multiple of 2.

**9.** The method of claim 7, wherein the at least one second type of detail representation layer comprises L second type of detail representation layers and L is a positive integer greater than or equal to 2, and performing lossless encoding on the residual value of the attribute information of the at least one point in the second type of detail representation layer comprises:

performing lossless encoding on residual values of attribute information of a first number of points in each of P second type of detail representation layers; and
performing lossless encoding on residual values of attribute information of a second number of points in each of Q second type of detail representation layers, wherein
P and Q each are positive integers and a sum of P and Q is less than or equal to L, the P second type of detail representation layers do not overlap with the Q second type of detail representation layers, and the first number is different from the second number.

**10.** The method of claim 9, wherein the P second type of detail representation layers are first P second type of detail representation layers in the L second type of detail representation layers.

**11.** The method of claim 9, wherein the Q second type of detail representation layers are last Q second type of detail representation layers in the L second type of detail representation layers.

**12.** The method of claim 9, wherein the last one in the P second type of detail representation layers is adjacent to the first one in the Q second type of detail representation layers.

**13.** The method of claim 9, wherein the first number is greater than the second number.

**14.** The method of claim 13, wherein the first number is a positive integer multiple of the second number.

**15.** The method of claim 9, wherein each two neighbouring points in the first number of points have an equal interval.

**16.** The method of claim 9, wherein each two neighbouring points in the second number of points have an equal interval.

**17.** The method of any of claims 1-16, further comprising:
determining a reconstructed value of attribute information of a target point according to a residual value of the attribute information of the target point and a prediction value of the attribute information, wherein the target point is a point in the point cloud for which lossless encoding is performed on a residual value of attribute information.

**18.** The method of claim 17, wherein determining the reconstructed value of the attribute information of the target point according to the residual value of the attribute information of the target point and the prediction value of the attribute information comprises:

determining the reconstructed value of the attribute information of the target point according to the following formula:

$$\mathrm{reconstructedColor} = \mathrm{attrResidual} + \mathrm{attrPredValue},$$

wherein reconstructedColor is the reconstructed value of the attribute information of the target point, attrResidual is the residual value of the attribute information of the target point, and attrPredValue is the prediction value of the attribute information of the target point.

**19.** The method of any of claims 9-16, further comprising:
generating a bitstream, wherein the bitstream comprises first information and the first information is indicative of a point for which lossless encoding is performed on a residual value of attribute information.

**20.** The method of claim 19, wherein the first information comprises flag information of the point for which lossless encoding is performed on the residual value of the attribute information.

**21.** The method of claim 19, wherein the first information comprises the number of points for which lossless encoding is performed on residual values of attribute information.

**22.** The method of claim 19, wherein the first information comprises the first number, the second number, and partition information of the P second type of detail representation layers and the Q second type of detail representation layers.

**23.** The method of claim 22, wherein when the last one in the P second type of detail representation layers is adjacent to the first one in the Q second type of detail representation layers, the partition information further comprises flag information of the first one in the Q second type of detail representation layers or flag information of the last one in the P second type of detail representation layers.

**24.** The method of claim 19, wherein the first information further comprises flag information of a first point in the second type of detail representation layer for which lossless encoding is performed on a residual value of attribute information.

**25.** The method of any of claims 1-16, wherein performing lossless encoding on the residual value of the attribute information of the at least one point in the point cloud comprises:

skipping the at least one point for which lossless encoding is performed on the residual value of the attribute information, in the process of quantizing the residual values of the attribute information of the points in the point cloud;
setting a quantization step size of the at least one point for which lossless encoding is performed on the residual value of the attribute information to be 1; or
setting a quantization parameter (QP) of the at least one point for which lossless encoding is performed on the residual value of the attribute information to be a target value, wherein the target value is a QP value corresponding to a quantization step size of 1.

**26.** The method of claim 1, wherein determining the prediction values of the attribute information of the points in the point cloud according to the geometry information of the points in the point cloud comprises:

encoding the geometry information of the points in the point cloud to obtain reconstructed values of the geometry information of the points in the point cloud; and
determining the prediction values of the attribute information of the points in the point cloud according to the reconstructed values of the geometry information of the points in the point cloud.

**27.** The method of claim 1, wherein determining the residual values of the attribute information of the points in the point cloud according to the prediction values of the attribute information of the points in the point cloud comprises: determining differences between original values of the attribute information of the points in the point cloud and the prediction values of the attribute information as the residual values of the attribute information of the points in the point cloud.

**28.** A point cloud decoding method, comprising:

decoding a bitstream of a point cloud to determine geometry information of points in the point cloud;
determining prediction values of attribute information of the points in the point cloud according to the geometry information of the points in the point cloud;
decoding the bitstream of the point cloud to obtain residual values of the attribute information of the points in the point cloud, the residual values comprising a residual value of at least one point of which the residual value of attribute information is determined to be subject to lossless encoding; and
determining reconstructed values of the attribute information of the points in the point cloud according to the prediction values and the residual values of the attribute information of the points in the point cloud.

**29.** The method of claim 28, wherein decoding the bitstream of the point cloud to obtain the residual values of the attribute information of the points in the point cloud comprises:

decoding the bitstream of the point cloud to obtain first information, wherein the first information is indicative of a point of which a residual value of attribute information is determined to be subject to lossless encoding;
decoding the bitstream of the point cloud to obtain residual information of attribute information of a point to-be-decoded in the point cloud;
determining whether the residual information of the attribute information of the point to-be-decoded in the point cloud is determined to be subject to lossless encoding according to the first information;
determining the residual information of the attribute information of the point to-be-decoded as a residual value of the attribute information of the point to-be-decoded based on a determination that the residual information of the attribute information of the point to-be-decoded is determined to be subject to lossless encoding; and
determining residual information of the attribute information of the point to-be-decoded after inverse quantization as the residual value of the attribute information of the point to-be-decoded based on a determination that the residual information of the attribute information of the point to-be-decoded is determined to be subject to lossy encoding.

**30.** The method of claim 29, wherein the first information comprises N, and N is a total number of points in the point cloud of which residual values of attribute information have been subject to lossless encoding.

**31.** The method of claim 30, wherein N is an integer multiple of 2.

**32.** The method of claim 30, wherein each two neighbouring points in N points have an equal interval.

**33.** The method of claim 32, wherein determining whether the residual information of the attribute information of the point to-be-decoded is determined to be subject to lossless encoding according to the first information comprises: determining that the residual information of the attribute information of the point to-be-decoded is determined to be subject to lossless encoding based on a determination that the point to-be-decoded is one of the N points.

**34.** The method of claim 29, wherein when the first information comprises a preset interval, determining whether the residual information of the attribute information of the point to-be-decoded is determined to be subject to lossless encoding according to the first information comprises:
determining that the residual information of the attribute information of the point to-be-decoded is determined to be subject to lossless encoding when determining, according to the preset interval, that an interval between the point to-be-decoded and a previous point of which a residual value of attribute information is determined to be subject to lossless encoding is equal to the preset interval.

**35.** The method of claim 29, further comprising:
performing level of detail (LOD) partition on the point cloud according to the geometry information of the points in the point cloud to obtain a plurality of detail representation layers of the point cloud, wherein each detail representation layer comprises one or more points.

**36.** The method of claim 35, wherein when the first information comprises a first preset value, determining whether the residual information of the attribute information of the point to-be-decoded is determined to be subject to lossless encoding according to the first information comprises:

obtaining, from the plurality of detail representation layers, at least one first type of detail representation layer in which a total number of points is less than or equal to the first preset value and at least one second type of detail representation layer in which a total number of points is greater than the first preset value, according to the first preset value; and
determining that the residual information of the attribute information of the point to-be-decoded is determined to be subject to lossless encoding when the point to-be-decoded belongs to the first type of detail representation layer.

**37.** The method of claim 36, wherein when the first information comprises M and M is the number of points in one second type of detail representation layer of which residual values of attribute information is determined to be subject to lossless encoding and is a positive integer multiple of 2, determining whether the residual information of the attribute information of the point to-be-decoded is determined to be subject to lossless encoding according to the first information comprises:
determining that the residual information of the attribute information of the point to-be-decoded is determined to be subject to lossless encoding when the point to-be-decoded is one of M points.

**38.** The method of claim 36, wherein the at least one second type of detail representation layer comprises L second type of detail representation layers and L is a positive integer greater than or equal to 2, and when the first information comprises a first number, a second number, and partition information of P second type of detail representation layers and Q second type of detail representation layers, determining whether the residual information of the attribute information of the point to-be-decoded is determined to be subject to lossless encoding according to the first information comprises:

partitioning the L second type of detail representation layers into the P second type of detail representation layers and the Q second type of detail representation layers according to the partition information;
determining that the residual information of the attribute information of the point to-be-decoded is determined to be subject to lossless encoding based on a determination that the point to-be-decoded is one of the first number of points in the P second type of detail representation layers of which residual values of attribute information have been subject to lossless encoding; and
determining that the residual information of the attribute information of the point to-be-decoded is determined to be subject to lossless encoding based on a determination that the point to-be-decoded is one of the second number of points in the Q second type of detail representation layers of which residual values of attribute information have been subject to lossless encoding, wherein
P and Q each are positive integers and a sum of P and Q is less than or equal to L, the P second type of detail representation layers do not overlap with the Q second type of detail representation layers, and the first number is different from the second number.

**39.** The method of claim 38, wherein the P second type of detail representation layers are first P second type of detail representation layers in the L second type of detail representation layers.

**40.** The method of claim 38, wherein the Q second type of detail representation layers are last Q second type of detail representation layers in the L second type of detail representation layers.

**41.** The method of claim 38, wherein the last one in the P second type of detail representation layers is adjacent to the first one in the Q second type of detail representation layers.

**42.** The method of claim 41, wherein when the last one in the P second type of detail representation layers is adjacent to the first one in the Q second type of detail representation layers, the partition information further comprises flag information of the first one in the Q second type of detail representation layers or flag information of the last one in the P second type of detail representation layers.

**43.** The method of claim 38, wherein the first information further comprises flag information of a first point in the second type of detail representation layer of which a residual value of attribute information is determined to be subject to lossless encoding.

**44.** The method of claim 38, wherein the first information further comprises flag information of points of which residual values of attribute information have been subject to lossless encoding.

**45.** The method of claim 38, wherein the first number is greater than the second number.

**46.** The method of claim 45, wherein the first number is a positive integer multiple of the second number.

**47.** The method of claim 38, wherein each two neighbouring points in the first number of points have an equal interval.

**48.** The method of claim 38, wherein each two neighbouring points in the second number of points have an equal interval.

**49.** The method of any of claims 29-48, wherein determining the reconstructed values of the attribute information of the points in the point cloud according to the prediction values and the residual values of the attribute information of the points in the point cloud comprises:
determining a sum of a prediction value and the residual value of the attribute information of the point to-be-decoded as a reconstructed value of the attribute information of the point to-be-decoded.

**50.** The method of claim 49, wherein when the residual value of the attribute information of the point to-be-decoded is determined to be subject to lossless encoding, determining the sum of the prediction value and the residual value of the attribute information of the point to-be-decoded as the reconstructed value of the attribute information of the point to-be-decoded comprises:

determining the reconstructed value of the attribute information of the point to-be-decoded according to the following formula:

$$\mathrm{reconstructedColor} = \mathrm{attrResidual} + \mathrm{attrPredValue},$$

wherein reconstructedColor is the reconstructed value of the attribute information of the point to-be-decoded, attrResidual is the residual value of the attribute information of the point to-be-decoded, and attrPredValue is the prediction value of the attribute information of the point to-be-decoded.

**51.** A point cloud encoder, comprising:

an obtaining unit configured to obtain geometry information and attribute information of points in a point cloud;
a prediction unit configured to determine prediction values of the attribute information of the points in the point cloud according to the geometry information of the points in the point cloud;
a residual unit configured to determine residual values of the attribute information of the points in the point cloud according to the prediction values of the attribute information of the points in the point cloud; and
an encoding unit configured to process the residual values of the attribute information of the points in the point cloud with a first encoding process, lossless encoding being performed on a residual value of attribute information of at least one point in the point cloud in the first encoding process.

**52.** A point cloud decoder, comprising:

a decoding unit configured to decode a bitstream of a point cloud to determine geometry information of points in the point cloud;
a prediction unit configured to determine prediction values of attribute information of the points in the point cloud according to the geometry information of the points in the point cloud;
a determining unit configured to decode the bitstream of the point cloud to obtain residual values of the attribute information of the points in the point cloud, the residual values comprising a residual value of at least one point of which the residual value of attribute information is determined to be subject to lossless encoding; and

a reconstruction unit configured to determine reconstructed values of the attribute information of the points in the point cloud according to the prediction values and the residual values of the attribute information of the points in the point cloud.

**53.** A point cloud encoding and decoding system, comprising the point cloud encoder of claim 51 and the point cloud decoder of claim 52.

100
encoding device 110
point cloud source 111
point cloud encoder 112
output interface 113
130
decoding device 120
display device 123
point cloud decoder 122
input interface 121

FIG. 1

200
geometry information
attribute information
201
coordinate transform unit
color transform unit
210
attribute transfer unit
211
202
quantization and repetition point removal unit
204
203
octree analysis unit
geometry reconstruct ion unit
RA HT
predicting transform unit
lifting transform unit
205
212
213
214
coefficient quantization unit
215
first arithmetic encoding unit
216
second arithmetic encoding unit
geometry bitstream
attribute bitstream

FIG. 2

300
geometry bitstream
attribute bitstream
first arithmetic decoding unit
301
second arithmetic decoding unit
310
inverse quantization unit
311
octree synthesization unit
302
geometry reconstruction unit
303
RA HT
predicting transform unit
lifting transform unit
312
313
314
coordinate inverse transform unit
304
color inverse transform unit
315
geometry information
attribute information

FIG. 3

attribute encoding module 400
point cloud data
preprocessing unit 410
reconstructed value of position information
prediction unit 440
prediction block
420
residual block
quantization unit 430
inverse quantization unit 450
460
reconstructed block
filtering unit 470
decoding buffer unit 480
encoding unit 490
attribute bitstream


FIG. 4

attribute bitstream
attribute decoding module 500
decoding unit 510
inverse quantization unit 530
prediction unit 520
540
filtering unit 550
decoding buffer unit 560
point cloud data

FIG. 5

600
obtain geometry information and attribute information of points in a point cloud
S601
determine prediction values of the attribute information of the points in the point cloud according to the geometry information of the points in the point cloud
S602
determine residual values of the attribute information of the points in the point cloud according to the prediction values of the attribute information of the points in the point cloud
S603
process the residual values of the attribute information of the points in the point cloud with a first encoding process, where lossless encoding is performed on a residual value of attribute information of at least one point in the point cloud in the first encoding process
S604

FIG. 6

700
obtain geometry information and attribute information of points in a point cloud
S701
perform LOD partition on the point cloud according to the geometry information of the points in the point cloud to obtain multiple detail representation layers of the point cloud, where each detail representation layer includes one or more points
S702
determine the prediction values of the attribute information of the points in the point cloud according to the multiple detail representation layers of the point cloud
S703
determine the residual values of the attribute information of the points in the point cloud according to the prediction values of the attribute information of the points in the point cloud and the original values of the attribute information
S704
perform lossless encoding on a residual value of attribute information of at least one point in at least one detail representation layer in the multiple detail representation layers
S705
determine a reconstructed value of attribute information of a target point according to a residual value of the attribute information of the target point and a prediction value of the attribute information, where the target point is a point in the point cloud for which lossless encoding is performed on a residual value of attribute information
S706
generate an attribute bitstream, where the attribute bitstream includes first information and the first information is indicative of a point for which lossless encoding is performed on a residual value of attribute information
S707

FIG. 7

p0
p1
p4
p3
p7
p6
p9
p5
p8
p2
original order
P0, p1, p2, p3, p4, p5, p6, p7, p8, p9
LOD order
p0, p5, p4, p2
p1, p6, p3
p9, p8, p7
L0=R0
R1
R2
L1
L2

FIG. 8

LOD order
1
2
3
4
5
6
7
8
9
10
11
12
13
14
first type of detail representation layer
second type of detail representation layer

FIG. 9

800
decode a bitstream of a point cloud to determine geometry information of points in the point cloud
S801
determine prediction values of attribute information of the points in the point cloud according to the geometry information of the points in the point cloud
S802
decode the bitstream of the point cloud to obtain residual values of the attribute information of the points in the point cloud, where the residual values include a residual value of at least one point of which the residual value of attribute information is determined to be subject to lossless encoding
S803
determine reconstructed values of the attribute information of the points in the point cloud according to the prediction values and the residual values of the attribute information of the points in the point cloud
S804

FIG. 10

900
decode a geometry bitstream to obtain geometry information of points of a point cloud
S901
perform LOD partition on the point cloud according to the geometry information of the points in the point cloud to obtain multiple detail representation layers of the point cloud, where each detail representation layer includes one or more points
S902
decode an attribute bitstream to obtain first information, where the first information is used to indicate a point of which a residual value of attribute information is determined to be subject to lossless encoding
S903
determine the prediction value of the attribute information of the point to-be-decoded according to geometry information of a point to-be-decoded in the point cloud and the multiple detail representation layer
S904
decode the attribute bitstream to obtain residual information of attribute information of the point to-be-decoded, and determine whether the residual information of the attribute information of the point to-be-decoded is determined to be subject to lossless encoding according to the first information
S905

FIG. 11

determine the residual information of the attribute information of the point to-be-decoded as a residual value of the attribute information of the point to-be-decoded based on a determination that the residual information of the attribute information of the point to-be-decoded is determined to be subject to lossless encoding; determine residual information of the attribute information of the point to-be-decoded after inverse quantization as the residual value of the attribute information of the point to-be-decoded based on a determination that the residual information of the attribute information of the point to-be-decoded is determined to be subject to lossy encoding

S906

determine the reconstructed value of the attribute information of the point to-be-decoded according to the prediction value and the residual value of the attribute information of the point to-be-decoded

S907

FIG. 11

point cloud encoder 10
obtaining unit 11
prediction unit 12
residual unit 13
encoding unit 14
reconstruction unit 15

FIG. 12

point cloud decoder 20
decoding unit 21
prediction unit 22
determining unit 23
reconstruction unit 24

FIG. 13

30
electronic device
transceiver
33
31
32
memory
computer program
processor
34

FIG. 14

point cloud encoding and decoding system 40
point cloud
encoder 41
point cloud
decoder 42

FIG. 15

## INTERNATIONAL SEARCH REPORT

International application No. **PCT/CN2020/138423**

**A. CLASSIFICATION OF SUBJECT MATTER**

H04N 19/593(2014.01)i; H04N 19/186(2014.01)i; G06T 17/00(2006.01)i

According to International Patent Classification (IPC) or to both national classification and IPC

**B. FIELDS SEARCHED**

Minimum documentation searched (classification system followed by classification symbols)

H04N,G06T

Documentation searched other than minimum documentation to the extent that such documents are included in the fields searched

CNABS, CNTXT, CNKI, VEN, WOTXT, USTXT, EPTXT: 点云, 三维, 几何, 属性, 预测, 残差, 无损, 量化, point cloud, three-dimensional, geometry, attribute, predict, residual, lossless, quantization

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | CN 111095929 A (APPLE INC.) 01 May 2020 (2020-05-01) description paragraphs 54, 59, 61, 92-97, 302-303 | 1-5, 17-18, 25-28, 51-53 |
| Y | US 2020175725 A1 (POINT CLOUD COMPRESSION, B.V.) 04 June 2020 (2020-06-04) description, paragraph 32 | 1-5, 17-18, 25-28, 51-53 |
| A | CN 111953998 A (XIDIAN UNIVERSITY) 17 November 2020 (2020-11-17) entire document | 1-53 |
| A | US 2020021856 A1 (APPLE INC.) 16 January 2020 (2020-01-16) entire document | 1-53 |
| A | WO 2020190093 A1 (LG ELECTRONICS INC.) 24 September 2020 (2020-09-24) entire document | 1-53 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 September 2021** | **13 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/138423**

| Patent document cited in search report | | | Publication date (day/month/year) | Patent family member(s) | | | Publication date (day/month/year) |
|---|---|---|---|---|---|---|---|
| CN | 111095929 | A | 01 May 2020 | WO | 2019055772 | A1 | 21 March 2019 |
| | | | | KR | 20200039757 | A | 16 April 2020 |
| | | | | DE | 112018005149 | T5 | 10 September 2020 |
| | | | | US | 10861196 | B2 | 08 December 2020 |
| | | | | US | 2019080483 | A1 | 14 March 2019 |
| US | 2020175725 | A1 | 04 June 2020 | US | 10762667 | B2 | 01 September 2020 |
| CN | 111953998 | A | 17 November 2020 | | None | | |
| US | 2020021856 | A1 | 16 January 2020 | US | 10911787 | B2 | 02 February 2021 |
| WO | 2020190093 | A1 | 24 September 2020 | | None | | |

Form PCT/ISA/210 (patent family annex) (January 2015)